# EUROPÄISCHE PATENTSCHRIFT

(11) **EP 3 573 843 B1**
(45) Veröffentlichungstag und Bekanntmachung des Hinweises auf die Patenterteilung: **01.05.2024**
(21) Anmeldenummer: 18703533.2
(22) Anmeldetag: 29.01.2018
(51) Int. Cl.: B60B 15/26, B60B 3/10, B60B 19/00, B60B 3/14, B60B 11/10

(54) **AUFSATZ FÜR EIN FAHRZEUGRAD**
ATTACHMENT FOR A VEHICLE WHEEL
ÉLÉMENT À MONTER SUR UNE ROUE DE VÉHICULE

(30) Priorität: 27.01.2017 DE 102017101664
(43) Veröffentlichungstag der Anmeldung: 04.12.2019
(73) Patentinhaber: GV Engineering GmbH, 71296 Heimsheim (DE)
(72) Erfinder: TSIBERIDIS, Konstantin, 74199 Untergruppenbach (DE)
(74) Vertreter: Beyer, Andreas
(86) Internationale Anmeldenummer: PCT/EP2018/052144
(87) Internationale Veröffentlichungsnummer: WO 2018/138341

(56) Entgegenhaltungen:
- EP-A1- 2 662 222
- EP-A1- 2 662 222
- WO-A2-2006/123044
- WO-A2-2006/123044
- WO-A2-2018/149910
- US-A- 1 055 372
- US-A- 1 055 372
- US-A- 1 558 864
- US-A- 1 558 864
- US-A- 2 083 367
- US-A- 2 083 367
- US-A- 2 354 444
- US-A- 3 112 784
- US-A- 3 112 784
- US-A- 3 208 798
- US-A- 4 666 216
- US-A- 4 666 216

## Beschreibung

Die vorliegende Erfindung betrifft allgemein einen Aufsatz für ein Fahrzeugrad zur Ermöglichung eines Fahrbetriebs bei eingeschränkter Reifenfunktion. Zudem sind Gegenstand der Erfindung ein Aufsatzset für ein Fahrzeugrad und ein System aus einem Fahrzeugrad und einem Aufsatz oder einem Aufsatzset.

Aus dem Dokument US 4 666 216 A ist ein Aufsatz für ein Fahrzeugrad gemäß dem Oberbegriff des Anspruchs 1 bekannt. Das Dokument US 4 666 216 A offenbart ein Ersatzrad, welches zur Befestigung an einem Fahrzeugrad axial zu letzterem hin bewegt wird und angrenzend am Fahrzeugrad positioniert wird. Dabei werden Befestigungslöcher so angeordnet, dass sie Bolzen überlagern. Anschließend werden die Bolzen in die Befestigungslöcher eingeführt, bis sich die Bolzen durch die Befestigungslöcher hindurch erstrecken.

Das Dokument US 2 354 444 A offenbart ein Aufsatzset für ein Fahrzeugrad gemäß dem Oberbegriff des Anspruchs 12.

Das Dokument EP 2 662 222 A2 offenbart ein Fahrzeugrad, das ein Hilfsrad mit einer Nabe, einem Reifen und mehreren an der Nabe befestigten Verriegelungsanordnungen aufweist. Die Verriegelungsanordnungen befestigen das Hilfsrad an der Nabe des Fahrzeugrades, sodass das Hilfsrad über die Nabe angetrieben wird, und sie enthalten jeweils eine selbst-sperrende Vorrichtung mit kontinuierlichen Sperrstellungen. Die Verriegelungsanordnungen sind in Durchgangslöchern der Nabe aufgenommen.

Das Dokument US 1 055 372 A beschreibt ein Notrad und Mittel zum Befestigen des Notrades an einem Rad eines Automobils. Zum Befestigen des Notrades an der Felge des Automobilrades sind entlang der Seitenfläche des Rades Klemmvorrichtungen vorgesehen.

In dem Dokument WO 2006/123044 A2 ist eine Felge offenbart, bei der Verriegelungsbolzen einen Flansch der Felge an der Oberfläche einer Fahrzeugfelge befestigen. Die Verriegelungsbolzen bestehen aus einer Mutter, einer Unterlegscheibe, einem Gewindebolzen und einem Montagehaken und sind jeweils in Löchern der Fahrzeugfelge angeordnet.

Mit einem Fahrzeugrad ist hier ein Fahrzeugrad eines Kraftfahrzeugs gemeint. Unter einem Fahrbetrieb bei eingeschränkter Reifenfunktion ist dabei vorliegend ein Fahrbetrieb gemeint, bei dem der Reifen nicht mit seinen bei üblichen Straßenverhältnissen und üblichem Reifenzustand gegebenen Eigenschaften betreibbar ist. Damit kann beispielsweise eine Fahrt mit plattem Reifen gemeint sein oder auch der Betrieb des Fahrzeugs bei Eis- oder Schneeglätte. Bevorzugtes Anwendungsgebiet der vorliegenden Erfindung ist die Ermöglichung einer Fahrt mit plattem Reifen.

Mit axialer Richtung ist vorliegend die Richtung der Drehachse des Fahrzeugrades gemeint. Mit der radialen Richtung ist die orthogonale Richtung zu dieser Drehachse des Fahrzeugrades gemeint. Der Reifen des Fahrzeugrades ist also von der Felge des Fahrzeugrades aus gesehen radial außenliegend angeordnet. Radial innenliegend ist beispielsweise der Lochkreis des Fahrzeugrades.

Die Erfindung schlägt einen Aufsatz für ein Fahrzeugrad mit den Merkmalen des Anspruchs 1, ein Aufsatzset mit den Merkmalen des Anspruchs 12 und ein System mit den Merkmalen des Anspruchs 14 vor.

Der erfindungsgemäße Aufsatz ist mit einem Grundkörper und einer Befestigungseinrichtung zur Befestigung des Aufsatzes an der Felge des Fahrzeugrads ausgebildet, wobei der Grundkörper in einer axialen Richtung gesehen kreis- oder weitestgehend kreisringförmig ausgebildet ist. Dabei ist der Grundkörper bevorzugt als Stahlscheibe ausgebildet. Andere Materialien jedoch ebenso denkbar. Die Aussage bezüglich der Form des Grundkörpers bezieht sich auf dessen Zustand, wenn der Aufsatz am Fahrzeugrad, in seiner für den Betrieb vorgesehenen Konfiguration angebracht ist. Beispielsweise kann der Grundkörper in mehrere Einzelteile, die jeweils nicht mehr Kreis oder kreisringförmig sind, zerlegbar sein.

Der erfindungsgemäße Aufsatz kann als kompakte Alternative für ein Ersatzrad verwendet werden.

Vorteilhaft ist, wenn die Befestigungseinrichtung wenigstens ein, ggf. mehrere, lösbare Befestigungsmittel umfasst. Das Befestigungsmittel kann hierzu beispielsweise an einem Haltebock der Befestigungseinrichtung lösbar befestigt sein, bzw. lösbar befestigbar sein. Eine derartige lösbare Befestigung ist beispielsweise über eine Schraubverbindung realisierbar.

Vorteilhaft ist auch, wenn die Befestigungseinrichtung derart ausgebildet ist, dass das lösbare Befestigungsmittel in wenigstens zwei in radialer Richtung versetzt zueinander angeordneten Positionen in jeweils auf einen bestimmten Felgendurchmesser angepassten, vorgesehenen Positionen mit dem Grundkörper verbindbar sind. Beispielsweise kann die Befestigungseinrichtung hierzu wenigstens zwei in radialer Richtung versetzt zueinander angeordnete Halteböcke umfassen, so dass je nach Felgendurchmesser des Fahrzeugrades, auf welches der Aufsatz aufgesetzt werden soll, das Befestigungsmittel dann über den entsprechenden Haltebock befestigt und damit mit dem Grundkörper verbunden werden kann. Hierdurch kann ein und derselbe Aufsatz beispielsweise für 17 Zoll und 18 Zoll Felgen verwendet werden.

Vorteilhaft ist auch, wenn die Befestigungsmittel gegenüber dem Grundkörper, bspw. gegenüber Halteböcken oder anderen Einrichtungen zur Befestigung der Befestigungsmittel gefedert angebracht sind. Ebenso oder alternativ können die Halteböcke oder anderen Einrichtungen zur Befestigung der Befestigungsmittel gefedert gegenüber dem Grundkörper angebracht sein.

Vorteilhaft ist auch, wenn die Befestigungseinrichtung derart ausgebildet ist, dass sie bezüglich des Felgendurchmessers anpassbar ist. Dies kann beispielsweise durch die oben beschriebene wechselbare Position der Befestigungsmittel realisiert sein oder aber auch durch ein in radialer Richtung verschiebbares Befestigungsmittel oder durch einen Greifmechanismus, der in radialer Richtung auf verschiedene Durchmesser anpassbar ist. Ein derartiger anpassbarer Greifmechanismus kann beispielsweise ähnlich einem Spannfutter arbeiten, die Befestigungsmittel können dabei entsprechend einer Spannbacke arbeiten.

Erfindungsgemäß umfasst die Befestigungseinrichtung wenigstens ein, vorzugsweise mehrere, Befestigungsmittel, die in ihrem mit dem Grundkörper verbundenen Zustand gegenüber dem Grundkörper in radialer Richtung beweglich, insbesondere verschieblich, sind. Das bzw. die Befestigungsmittel kann bzw. können also, je nach Felgendurchmesser, in radialer Richtung auf die Felge bzw. das Felgenhorn zubewegt werden. Hierdurch kann auch ein Aufspannen des Aufsatzes auf die Felge bzw. das Felgenhorn effizient und sicher realisiert werden.

Ferner umfasst die Befestigungseinrichtung einen Kopplungsmechanismus, der eine Bewegung wenigstens zweier beweglicher, vorzugsweise aller beweglichen, Befestigungsmittel in radialer Richtung koppelt, vorzugsweise wobei der Kopplungsmechanismus derart ausgebildet ist, dass die Bewegung der gekoppelten beweglichen Befestigungsmittel gleichförmig ist. Beispielsweise kann der erfindungsgemäße Aufsatz bei dieser Ausführungsform haltekrallenartige Befestigungsmittel umfassen, die radial beweglich sind.

Die radiale Beweglichkeit kann in verschiedenen Positionen, in denen die Befestigungsmittel an dem Aufsatz anbringbar sind, gegeben sein oder die Befestigungsmittel können radial verschiebbar in einer vorgegebenen Position an dem Aufsatz angebracht sein. Der Kopplungsmechanismus gewährleistet, dass bei einer radialen Verschiebung eines der Befestigungsmittel die anderen Befestigungsmittel sich ebenfalls in der gleichen Richtung radial bewegen. Bei dieser Ausführungsform bewegen sich also alle gekoppelten Befestigungsmittel entweder radial einwärts oder radial auswärts. Dabei bewegen sich die gekoppelten Befestigungsmittel vorzugsweise gleichförmig, also mit gleicher Geschwindigkeit einwärts. Hierzu können die einzelnen Befestigungsmittel beispielsweise über eine Art starres Spanngurtsystem miteinander verbunden sein. Denkbar ist auch eine Kopplung über beispielsweise pneumatische oder hydraulische Leitungen. Die Befestigungsmittel können aber beispielsweise auch über eine Art Zahnradsystem miteinander verbunden sein, um die Kopplung zu realisieren. Bevorzugt ist, wenn nicht nur die radiale Bewegung der einzelnen Befestigungsmittel gekoppelt ist, sondern zusätzlich auch eine axiale Bewegung der Befestigungsmittel bspw. nach einer der oben beschriebenen Arten gekoppelt ist.

Vorteilhaft ist auch, wenn die Befestigungseinrichtung, vorzugsweise wenigstens eines der Befestigungsmittel, vorzugsweise mehrere, insbesondere sämtliche Befestigungsmittel, einen Hakabschnitt umfassen, der ausgebildet ist, um einen Abschnitt, insbesondere ein Felgenhorn, der Felge des Fahrzeugrads zu hintergreifen. Über einen derartigen Hakabschnitt lässt sich der Aufsatz in vorteilhafter Weise sicher an der Felge des Fahrzeugrads anbringen. Mit einem Hakabschnitt ist dabei ein Abschnitt gemeint, der derart ausgebildet ist, dass er den Abschnitt der Felge, vorzugsweise das Felgenhorn der Felge, formschlüssig hintergreifen kann. Eine bevorzugte Ausführungsform kennzeichnet sich dabei dadurch, dass die Befestigungseinrichtung, vorzugsweise an mehreren um den Umfang verteilten Befestigungsmitteln, mehrere um den Umfang verteilte derartige Hakabschnitte aufweist, über die jeweils das Felgenhorn der Felge formschlüssig hintergriffen werden kann. Vorzugsweise sind die Hakabschnitte dabei in radialer Richtung, vorzugsweise ebenso in axialer Richtung, verschiebbar. Hierdurch können Sie in einfacher Weise in Richtung des Felgenhorns verschoben werden und dieses hintergreifen.

Vorteilhaft ist auch, wenn die Befestigungseinrichtung einen Kontaktabschnitt, der vorzugsweise am Hakabschnitt angeordnet ist, umfasst, wobei der Kontaktabschnitt eine nachgiebige, elastische Beschichtung zur Verhinderung einer Beschädigung des Abschnitts der Felge, insbesondere des Felgenhorns, umfasst. Mit dem Kontaktabschnitt ist dabei derjenige Abschnitt der Befestigungseinrichtung gemeint, der bei vorgesehener Montage des Aufsatzes am Fahrzeugrad, bzw. an der Felge des Fahrzeugrades, die Felge, insbesondere das Felgenhorn kontaktiert. Durch die beschriebene nachgiebige elastische Beschichtung, welche beispielsweise durch eine Gummierung implementiert werden kann, wird eine Beschädigung der Felge bzw. Felgenhorns zuverlässig vermieden.

Vorteilhaft ist auch, wenn der Kontaktabschnitt, insbesondere der Hakabschnitt, in Umfangsrichtung gekrümmt ausgebildet ist, um sich an das Felgenhorn anzuschmiegen. Hierzu können beispielsweise die Hakabschnitte bzw. die Kontaktabschnitt der Befestigungseinrichtung länglich und der umfänglichen Krümmung des Felgenhorns entsprechend in Umfangsrichtung gekrümmt ausgebildet sein. Dabei muss die Krümmung der Kontaktabschnitte nur im Wesentlichen der der Felge entsprechen, insbesondere, wenn die nachgiebige elastische Beschichtung vorhanden ist.

Vorteilhaft ist auch, wenn die Befestigungseinrichtung derart ausgebildet ist, dass sie die Felge, insbesondere das Felgenhorn, auf wenigstens einem Sechstel, vorzugsweise einem Viertel, vorzugsweise einem Drittel, vorzugsweise der Hälfte, deren, bzw. dessen, umfänglicher Erstreckung kontaktiert, wenn der Aufsatz an dem Fahrzeugrad angebracht ist. Dies ist beispielsweise durch die oben genannten in Umfangsrichtung gekrümmt ausgebildeten Haagabschnitte bzw. Kontaktabschnitte möglich. Beispielsweise können also bei dieser Ausführungsform die Kontaktabschnitte und/oder die Hakabschnitte auf einem Sechstel der umfänglichen Erstreckung des Felgenhorns an diesem anliegen.

Vorteilhaft ist auch, wenn die Befestigungseinrichtung, vorzugsweise der Kontaktabschnitt, vorzugsweise das Befestigungsmittel, insbesondere dessen Hakabschnitt, derart ausgebildet ist, dass der Aufsatz beim Befestigen an der Felge des Fahrzeugrads in axialer Richtung zur Felge hin gedrängt wird. Der Aufsatz zieht sich also beim Befestigen am Fahrzeugrad selbst in Richtung der Felge. Dies kann beispielsweise über die axiale Beweglichkeit der Befestigungsmittel realisiert sein. Beispielsweise kann eine radiale Einwärtsbewegung der Befestigungsmittel mit einer axialen Bewegung zwangsgekoppelt sein.

Vorteilhaft ist auch, wenn die Befestigungseinrichtung, insbesondere der Kontaktabschnitt bzw. der Hakabschnitt, eine in axialer Richtung gesehen nach radial innen, vorzugsweise linear oder bogenförmig, abfallende Spannfläche umfasst, wobei die Befestigungseinrichtung derart ausgebildet ist, dass sich die Spannfläche beim Befestigen des Aufsatzes an der Felge des Fahrzeugrads nach radial innen bewegt, insbesondere verschiebt, und die Spannfläche derart ausgebildet ist, dass der Aufsatz beim Befestigen an der Felge des Fahrzeugrads in axialer Richtung zur Felge hin gedrängt wird. Durch die Spannfläche, die wie oben beschrieben ausgebildet ist, wird bei einer Bewegung der Spannfläche, beispielsweise durch Bewegung der Befestigungsmittel, nach radial innen gleichzeitig eine Bewegung verursacht, die den Aufsatz in Richtung der Felge des Fahrzeugrads zwängt. Bei einer derartigen Ausgestaltung drängt sich also der Aufsatz beim Befestigen auf das Fahrzeugrad zu und sorgt für einen sicheren und festen Halt.

Die Befestigungsmittel können gegenüber den Halteböcken gefedert angebracht bzw. anbringbar sein. Ebenso oder zusätzlich können die Halteböcke gefedert gegenüber dem Grundkörper angebracht sein. Beide genannten vorteilhaften Ausführungsformen sorgen für einen ruhigeren Lauf des Fahrzeugrades, wenn ein entsprechender Aufsatz an ihm angebracht ist.

Vorteilhaft ist auch, wenn der Grundkörper ein felgenseitiges Teilstück und ein von diesem lösbares felgenabgewandtes Teilstück umfasst. Der Grundkörper kann dabei beispielsweise entlang einer zur axialen Richtung orthogonal verlaufenden Ebene in die eben genannten beiden Teilstücke trennbar sein. Zum einen lässt sich hierdurch der Aufsatz flexibler handhaben und zum anderen ergeben sich hieraus Vorteile für die Montage des Aufsatzes.

Vorteilhaft ist auch, wenn der Grundkörper, bzw. ggf. jeweils das felgenseitige Teilstück und das felgenabgewandte Teilstück, wenigstens zwei umfängliche Segmente umfasst bzw. umfassen. Bei dieser Ausführungsform sind also der Grundkörper bzw. die jeweiligen Teilstücke in umfänglicher Richtung in einzelne Segmente unterteilt. Hierdurch wird die Montage und Handhabung des Aufsatzes verbessert.

Vorteilhaft ist auch, wenn die umfänglichen Segmente, vorzugsweise lösbar, miteinander, insbesondere über einen, vorzugsweise lösbaren, Klappmechanismus oder eine Hintergriffstruktur in umfänglicher Richtung, miteinander verbunden sind. Beispielsweise über einen Klappmechanismus kann der Aufsatz, wenn er nicht benötigt wird, gefaltet und verstaut werden. Sind die einzelnen Segmente lösbar voneinander ausgebildet, so kann der Aufsatz in Einzelteile zerlegt und platzsparend verstaut werden. Die Ausführungsvariante mit den lösbar miteinander verbindbaren Segmenten bietet außerdem die Möglichkeit, einzelne Segmente zunächst miteinander zu verbinden und diese verbundenen Segmente dann am Fahrzeugrad zu montieren. Nach der Montage dieser verbundenen Segmente kann das Fahrzeugrad gedreht werden und ein weiteres Segment oder mehrere weitere Segmente eingefügt werden, um den Aufsatz am Fahrzeugrad zu vervollständigen. Hierdurch kann beispielsweise eine Montage des Aufsatzes ermöglicht werden, ohne das Fahrzeugrad vom Fahrzeug abzunehmen.

Vorteilhaft ist auch, wenn das felgenseitige Teilstück und das felgenabgewandte Teilstück, bzw. je ein Segment des felgenseitigen Teilstücks und des felgenabgewandten Teilstücks, im zusammengesetzten Zustand einen Aufnahmeabschnitt bilden, in dem ein Laufflächenkörper, bzw. ein Segment eines Laufflächenkörpers, beim Zusammensetzen in den zusammengesetzten Zustand formschlüssig, insbesondere über einen formschlüssigen Hintergriff, gehalten einsetzbar ist. Mit einem Laufflächenkörper ist dabei ein Element gemeint, dass dazu ausgebildet ist, eine Lauffläche des Aufsatzes, also die Kontaktfläche mit der Straße zu bilden.

Vorzugsweise ist dieser Laufkörper aus einem elastischen Gummimaterial bzw. Polymermaterial gebildet. Die formschlüssige Halterung, bzw. der formschlüssige Hintergriff, des Laufflächenkörpers kann durch eine schwalbenschwanzförmige Rinne, die zwischen den beiden Teilstücken gebildet ist, ausgeführt sein, wobei der Laufflächenkörper einen entsprechenden komplementär zu dieser Rinne ausgebildeten Abschnitt aufweist der in dieser Rinne formschlüssig aufnehmbar ist.

Vorteilhaft ist auch, wenn der Laufflächenkörper stoßdämpfend ausgebildet ist, vorzugsweise wobei der Laufflächenkörper aus einem elastisch federnden Material gebildet ist und/oder eine elastisch federnde Struktur aufweist, insbesondere eine Hohlräume und/oder Löcher umfassende Struktur aufweist. Hierdurch kann der Laufflächenkörper Fahrbahnunebenheiten abfedern. Denkbar ist jedoch auch ein luftgefüllter Laufflächenkörper ähnlich eines Reifens. Denkbar ist ein Laufflächenkörper aus einem Polymermaterial mit im Wesentlichen in axialer Richtung verlaufenden Durchbrüchen, welche zu einer elastisch dämpfenden Eigenschaft des Laufflächenkörpers führen. Denkbar sind jedoch auch andere Strukturen des Laufflächenkörpers, die zu den federnden Eigenschaften führen, insbesondere sind hierzu Hohlräume, die geschlossen oder offen sein können, im Laufflächenkörper denkbar.

Es kann vorteilhaft sein, wenn der Grundkörper Durchbrüche aufweist. Diese Durchbrüche können zum einen dazu dienen das Gewicht des Grundkörpers und damit des Aufsatzes zu reduzieren. Zum anderen können diese Durchbrüche 115 dazu dienen, dass der Aufsatz in einfacher Weise zusammenklappbar oder zusammenlegbar ist. In zusammengeklapptem oder zusammengelegtem Zustand kann vorzugsweise wenigstens ein von der Oberfläche des Grundkörpers abstehendes Element, wie beispielsweise die Befestigungseinrichtung oder ein Teil der Befestigungseinrichtung, in einen derartigen Durchbruch hineinragen.

Der Laufflächenkörper kann vorteilhafterweise derart ausgebildet sein, dass er eine Erstreckung in axialer Richtung aufweist, die mindestens der Erstreckung des Grundkörpers in axialer Richtung entspricht, insbesondere diese jedoch übersteigt. Mit anderen Worten der Laufflächenkörper kann in axialer Richtung gesehen dicker als oder wenigstens gleich dick wie der Grundkörper ausgeführt sein.

Vorteilhaft ist auch, wenn sich eine radial außen liegende Laufoberfläche des Aufsatzes in Richtung des Fahrzeugrades in axialer Richtung gesehen bis in ein Felgenmaul der Felge erstrecken, wenn der Aufsatz an der Felge des Fahrzeugrads befestigt ist. Vorteilhaft ist überdies, wenn sich der Aufsatz, bzw. dessen radial außen liegende Laufoberfläche, in Richtung des Fahrzeugrades in axialer Richtung gesehen bis zur Mitte der Felge erstreckt. Die Laufoberfläche des Aufsatzes überdeckt bei diesen Ausführungsformen also teilweise den Reifen. Beispielsweise kann der Aufsatz hierdurch als Schneekettenersatz dienen. Eine derartige Ausgestaltung des Aufsatzes mit entsprechend breiter Laufoberfläche verbessert auch die Haftung beim Fahren von Kurven.

Vorteilhaft ist auch, wenn der Aufsatz ein Zusatzbefestigungselement umfasst, das ausgebildet ist, um den Aufsatz im Bereich des Lochkreises, insbesondere an dem Lochkreis und/oder an der Zentralöffnung, der Felge und/oder an einer Speiche der Felge an der Felge zu befestigen. Ein derartiges Zusatzbefestigungselement kann beispielsweise als armartige Erweiterung zum Lochkreis hin ausgebildet sein. Hierdurch wird die Befestigungssicherheit des Aufsatzes erhöht.

Vorteilhaft ist auch, wenn das Zusatzbefestigungselement lösbar oder unlösbar an dem Aufsatz befestigt ist, vorzugsweise wobei die Befestigung des Zusatzbefestigungselements derart ist, dass das Zusatzbefestigungselement gegenüber dem Aufsatz bewegbar, vorzugsweise verschiebbar und/oder verschwenkbar ist. Bei dem lösbaren Zusatzbefestigungselement kann das Zusatzbefestigungselement beispielsweise bei Beginn der Montage angebracht werden, die Befestigungseinrichtung dann fest verspannt werden und das Zusatzbefestigungselement anschließend gelöst werden. Bei einem verschiebbaren Zusatzbefestigungselement kann dieses beispielsweise ausgeschoben und zur Montage des Aufsatzes verwendet werden und nach endgültiger Montage eingeschoben werden.

Gegenstand der vorliegenden Erfindung ist auch ein Aufsatzset für ein Fahrzeugrad, das einen Aufsatz für die fahrzeugseitige Befestigung an der Felge des Fahrzeugrads umfasst und einen weiteren Aufsatz für die fahrzeugabgewandtseitige Befestigung an der Felge des Fahrzeugrads, wobei wenigstens einer der beiden Aufsätze nach einem oder mehreren der vorangegangenen Ansprüche ausgebildet ist. Bei dem Aufsatzset, wie eben beschrieben, wird also bei der vorgesehenen Verwendung ein Aufsatz, wie er oben beschrieben ist, an der Außenseite des Fahrzeugrades befestigt und ein weiterer Aufsatz an der Innenseite des Fahrzeugrads befestigt. Hierdurch wird eine gute Straßenlage und Fahrsicherheit gewährleistet.

Vorteilhaft ist, wenn das Aufsatzset ein Verbindungselement umfasst, mit dem die beiden Aufsätze des Aufsatzsets verliersicher auf gegenüberliegenden Seiten des Fahrzeugrads und gegenseitig gegen das Fahrzeugrad spannbar sind, um eine endgültige Befestigung über die Befestigungsmittel zu ermöglichen. Das Verbindungselement kann also dazu verwendet werden, die beiden Aufsätze gegenüber dem Fahrzeugrad zu verspannen die Aufsätze werden anschließend über die Befestigungseinrichtung gegebenenfalls mit den Befestigungsmitteln, den Hakabschnitten und den Kontaktabschnitt an der Felge befestigt. Das Verbindungselement kann dann abgenommen werden. Das Verbindungselement wird hierzu zunächst zwischen den Speichen der Felge durchgeführt, um die beiden Aufsätze miteinander zu verbinden.

Gegenstand der vorliegenden Erfindung ist auch ein System aus einem Fahrzeugrad und einem Aufsatz oder einem Aufsatzset für ein Fahrzeugrad zur Ermöglichung des Fahrbetriebs bei eingeschränkter Reifenfunktion, wobei der Aufsatz bzw. das Aufsatzset nach einem oder mehreren der vorangegangenen Ausführungsformen ausgebildet ist.

Vorteilhaft ist, wenn der Aufsatz bzw. wenigstens einer der Aufsätze eine Ausnehmung umfasst über die der Aufsatz an die Felge des Fahrzeugrads anschraubbar ist, wobei die Felge des Fahrzeugrads ein Schraubenloch zur Aufnahme einer entsprechenden Befestigungsschraube umfasst und/oder dass der Aufsatz bzw. wenigstens einer der Aufsätze über eine Zapfen-Loch-Verbindung, die vorzugsweise selbstspannend und/oder selbstsichernd ausgebildet ist, mit der Felge des Fahrzeugrads verbindbar ist. Hierdurch kann der Aufsatz bzw. das Aufsatzset in einfacher Weise an dem entsprechend ausgebildeten Fahrzeugrad befestigt werden.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
- Figuren 1 bis 4: eine erste Ausführungsform eines erfindungsgemäßen Aufsatzes in verschiedenen Ansichten;
- Figur 5 bis 8: den Aufsatz aus Figur 1 in an einem Fahrzeugrad angebrachten Zustand in verschiedenen Ansichten;
- Figur 9: eine Detaildarstellung einer alternativen Ausführungsform von Befestigungsmitteln des Aufsatzes;
- Figur 10 und 11: eine alternative Ausführungsform des Aufsatzes in an Fahrzeugrad angebrachten Zustand (Figur 10) und teilweise dargestellt und in zerlegtem Zustand (Figur 11);

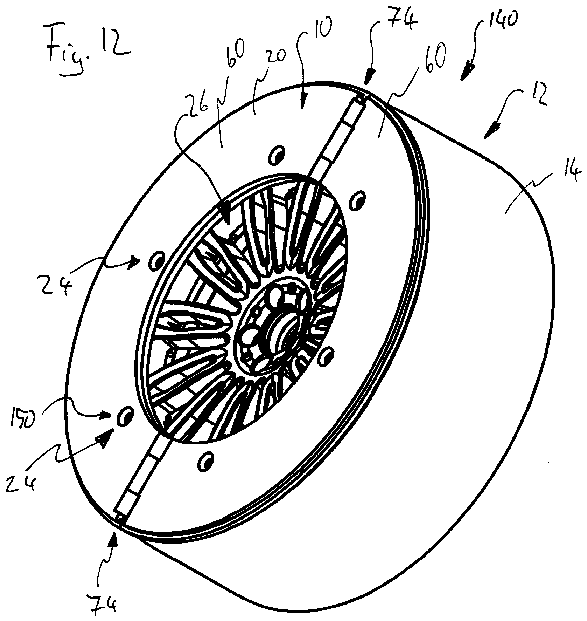

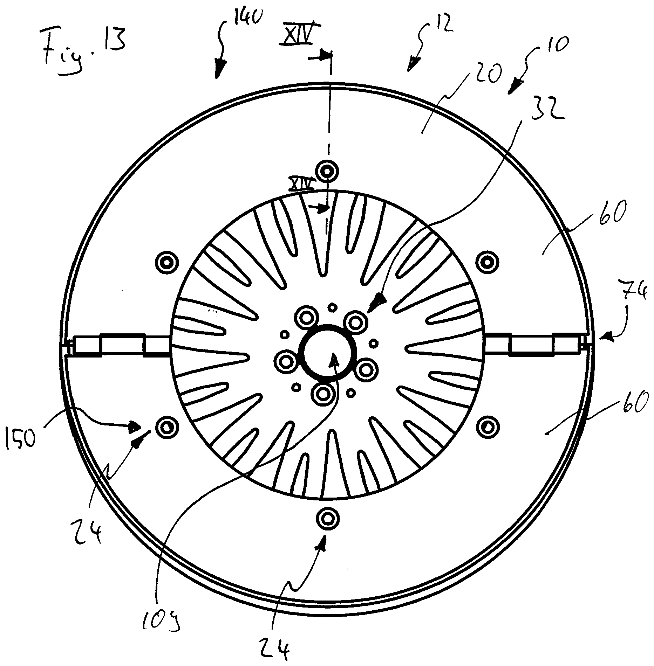

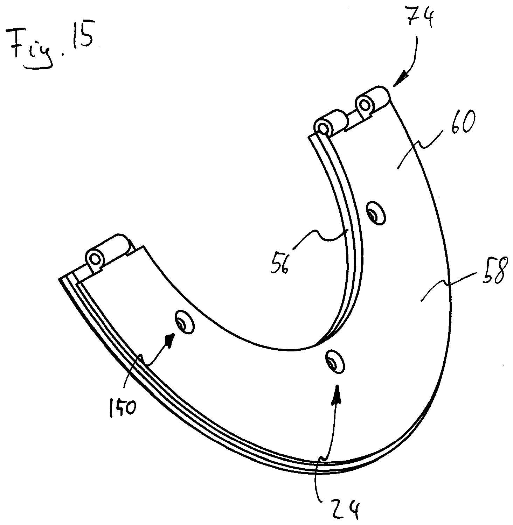

- Figur 12 bis 15: eine alternative Ausführungsform des Aufsatzes in an Fahrzeugrad angebrachten Zustand (Figur 12 bis 14; in Figur 14 geschnitten entlang der Linie XIV-XIV aus Figur 13) und teilweise dargestellt und in zerlegtem Zustand (Figur 15);
- Figur 16: eine alternative Ausführungsform des Aufsatzes teilweise dargestellt und in zerlegtem Zustand;
- Figur 17 bis 19: eine alternative Ausführungsform des Aufsatzes in an Fahrzeugrad angebrachten Zustand (Figur 17 bis 19; in Figur 19 geschnitten entlang der Linie XIX-XIX aus Figur 17);
- Figur 20: eine alternative Ausführungsform des Aufsatzes in an Fahrzeugrad angebrachten Zustand;
- Figur 21 bis 24: eine alternative Ausführungsform des Aufsatzes (Figur 21 in an Fahrzeugrad angebrachten Zustand, in Figur 22 ohne Fahrzeugrad, Figur 23 ohne Fahrzeugrad und zusammengeklappt, Figur 24 geschnitten entlang der Linie XXIV aus Figur 21);

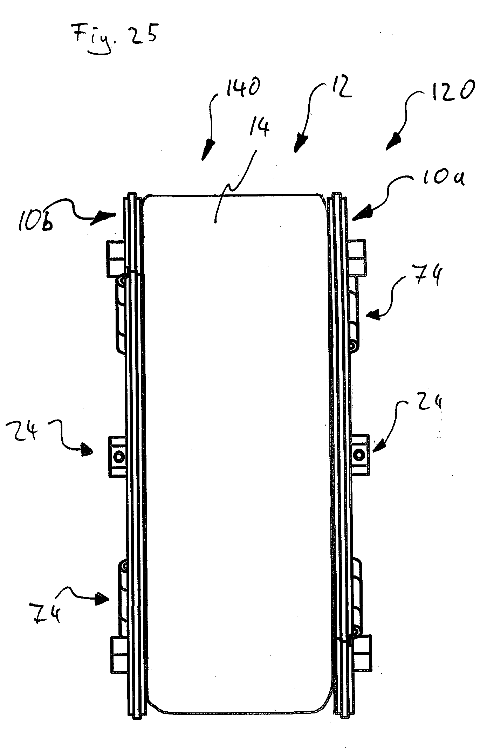

- Figur 25: ein Aufsatzset in an einem Fahrzeugrad angebrachten Zustand;
- Figur 26: eine alternative Ausführungsform des Aufsatzsets in schematischer Darstellung und in an dem Fahrzeugrad angebrachten Zustand; und
- Figur 27: eine alternative Ausführungsform des Aufsatzsets in schematischer Darstellung und in an dem Fahrzeugrad angebrachten Zustand.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

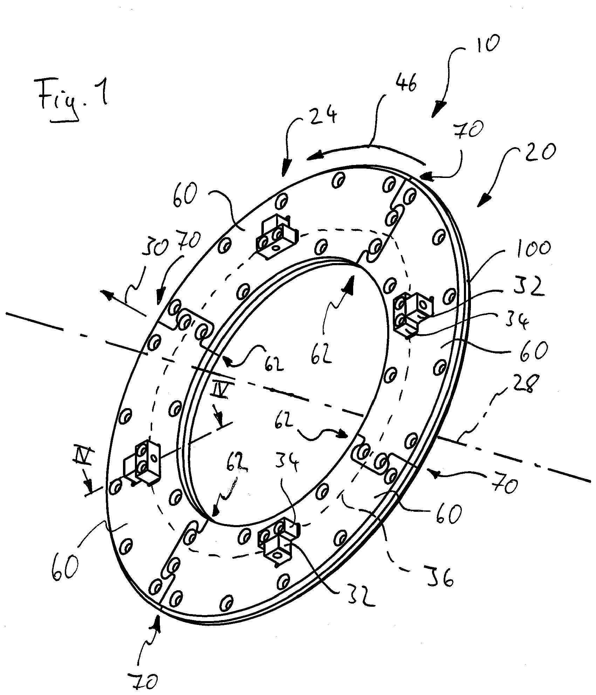

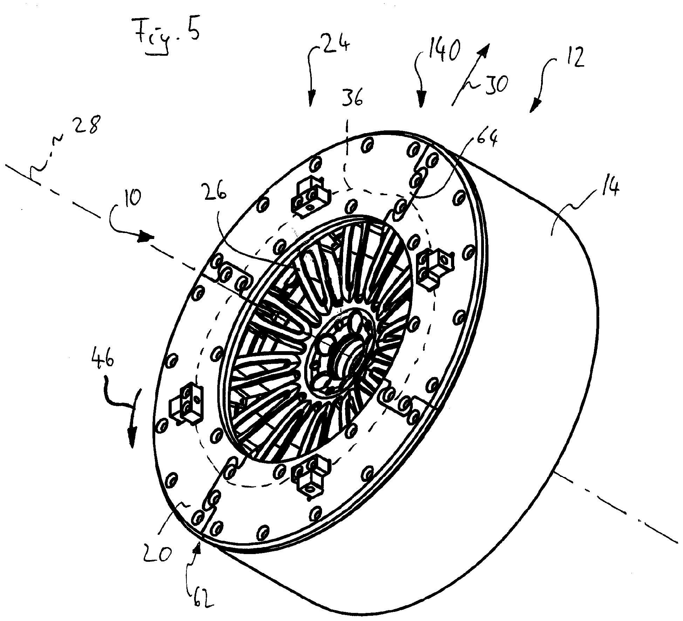

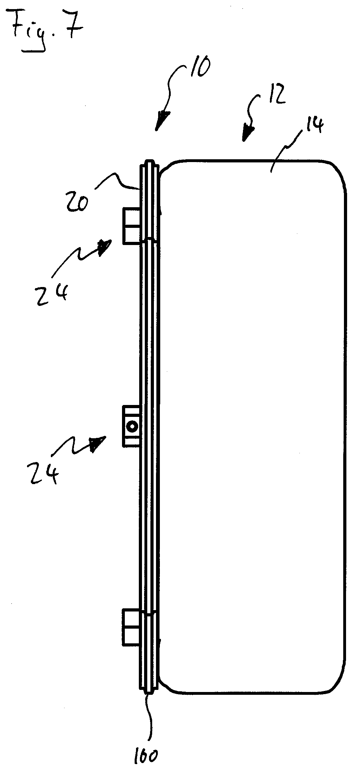

Ein erfindungsgemäßer Aufsatz 10 ist in Figur 1 gezeigt, wobei das Fahrzeugrad 12 in Figur 1 nicht gezeigt ist (das Fahrzeugrad 12 ist jedoch bspw. in den Figuren 5-8 zusammen mit dem Aufsatz 10 gezeigt). Der Aufsatz 10 dient zur Ermöglichung eines Fahrbetriebs bei eingeschränkter Reifenfunktion.

Das Fahrzeugrad 12 ist dabei ein Fahrzeugrad 12 eines Kraftfahrzeugs, wobei das Kraftfahrzeug nicht dargestellt ist. Mit einem Fahrbetrieb bei eingeschränkter Reifenfunktion ist vorliegend ein Fahrbetrieb gemeint, bei dem ein Reifen 14 des Fahrzeugrades 12 (siehe bspw. Figuren 5-8) nicht mit seinen bei üblichen Straßenverhältnissen und üblichem Reifenzustand gegebenen Eigenschaften betreibbar ist. Damit kann beispielsweise eine Fahrt mit plattem Reifen 14 gemeint sein oder auch der Betrieb des Fahrzeugs bei Eis- oder Schneeglätte. Bevorzugtes Anwendungsgebiet der vorliegenden Erfindung ist die Ermöglichung einer Fahrt mit plattem Reifen 14.

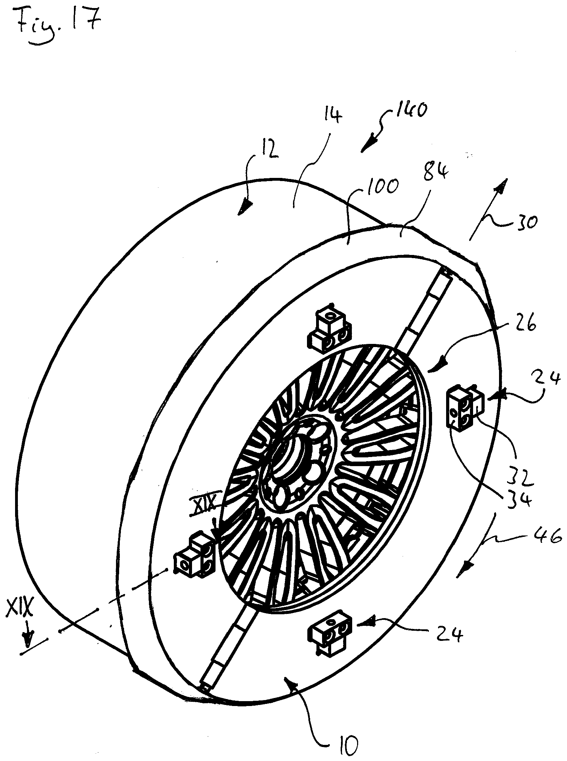

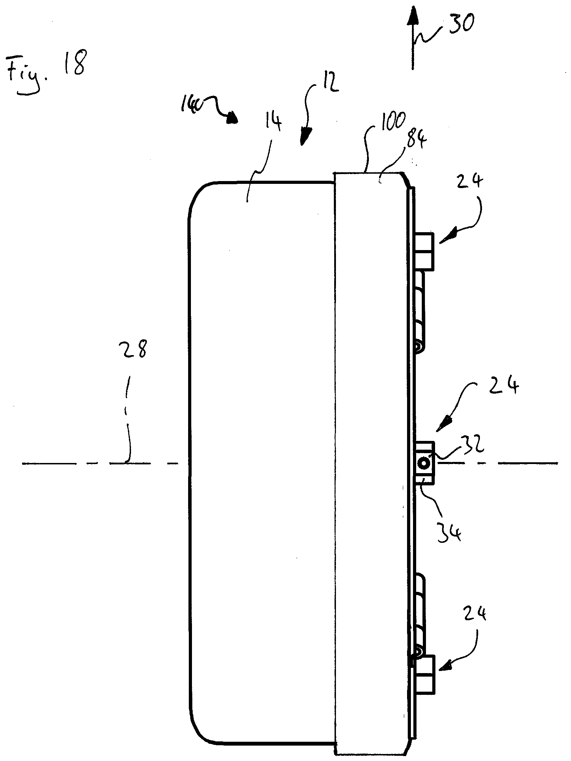

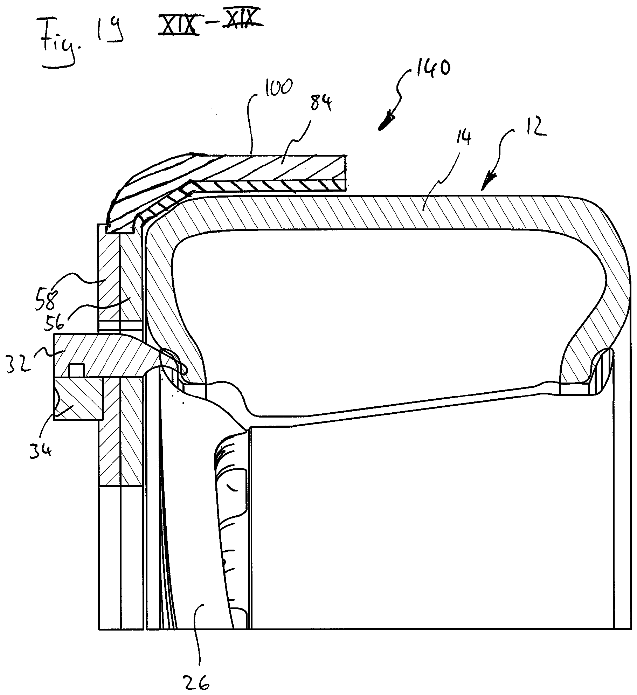

Die in den Figuren 17 bis 19 gezeigte Ausführungsform eignet sich besonders für die Ermöglichung des Fahrbetriebs bei Schnee- oder Eisglätte.

Der Aufsatz 10 umfasst generell einen Grundkörper 20 und eine Befestigungseinrichtung 24 zur Befestigung des Aufsatzes 10 an einer Felge 26 des Fahrzeugrades 12.

Der Grundkörper 20 ist in einer axialen Richtung 28 gesehen kreis- oder weitestgehend kreisringförmig (siehe beispielsweise Figur 1) ausgebildet. Damit ist gemeint, dass der Grundkörper 20 in seinem, wie beispielsweise in Figur 1 gezeigten, zusammengebauten Zustand, in dem er auch am Fahrzeugrad 12 im Fahrbetrieb montiert ist, die eben genannte Form aufweist.

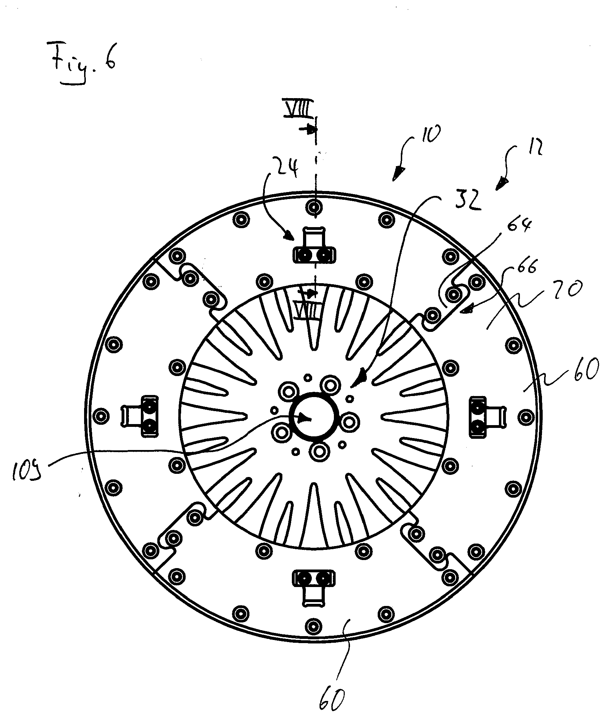

Mit axialer Richtung 28 ist vorliegend die Richtung der Drehachse des Fahrzeugrades 12 gemeint. Mit einer radialen Richtung 30 ist die orthogonale Richtung zu dieser Drehachse des Fahrzeugrades 12 gemeint. Der Reifen 14 des Fahrzeugrades 12 ist also von der Felge 26 des Fahrzeugrades 12 aus gesehen radial außenliegend angeordnet. Radial innenliegend ist beispielsweise ein Lochkreis 32 (siehe bspw. Figur 6) des Fahrzeugrades 12.

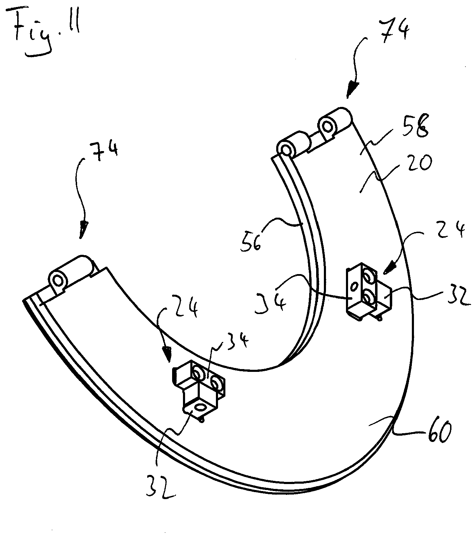

Die Befestigungseinrichtung 24 kann wenigstens ein, vorteilhafterweise mehrere, lösbare Befestigungsmittel 32 (siehe bspw. Figuren 1 bis 11) umfassen.

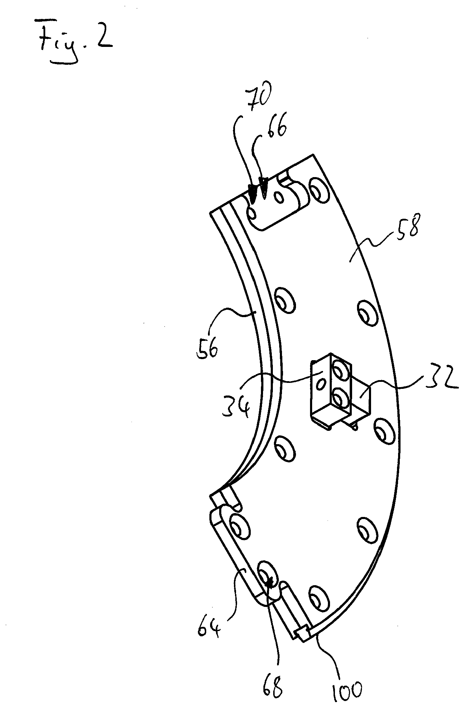

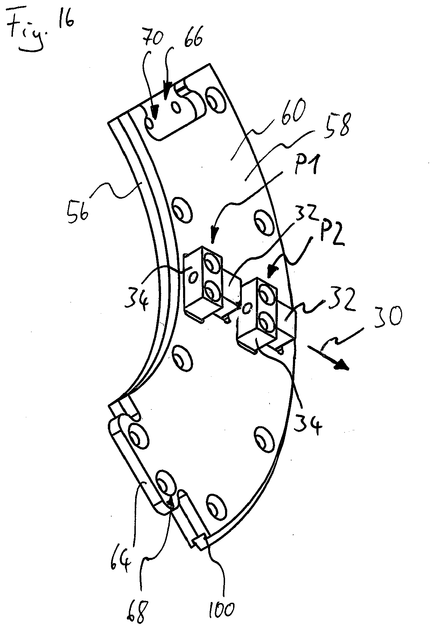

Die Befestigungseinrichtung 24 kann auch derart ausgebildet sein, dass das lösbare Befestigungsmittel 32 in wenigstens zwei in radialer Richtung 30 versetzt zueinander angeordneten Positionen P1 und P1 in jeweils auf einen bestimmten Felgendurchmesser angepassten vorgesehenen Positionen P1 und P2 mit dem Grundkörper 20 verbindbar sind (siehe Figur 16, die ein derartiges Ausführungsbeispiel in einer Darstellung entsprechend der Darstellung von Figur 2 zeigt).

Vorteilhafterweise ist die Befestigungseinrichtung 24 derart ausgebildet, dass sie bezüglich eines Felgendurchmessers anpassbar ist. Dies kann beispielsweise über in radialer Richtung 30 bewegliche, insbesondere wie in Figur 1 gezeigte, verschiebbare Befestigungsmittel 32 realisiert werden.

In Figur 1 sind die Befestigungsmittel 32 der Befestigungseinrichtung 24 jeweils an Halteböcken 34 lösbar befestigt. Die Befestigung der Befestigungsmittel 32 an den Halteböcken 34 ist derart ausgebildet, dass die Befestigungsmittel 32 in radialer Richtung verschieblich gegenüber dem Grundkörper 20 bzw. gegenüber den Halteböcken 34 sind. Die Halteböcke 34 sind dabei fest mit dem Grundkörper 20 verbunden. Durch die Verschiebung der Befestigungsmittel 32 kann der Aufsatz 10 an unterschiedliche Felgendurchmesser angepassten werden. Denkbar ist jedoch auch die Realisierung einer anpassbaren Befestigungseinrichtung 24 durch schwenkbare Befestigungsmittel 32. Bevorzugterweise sind die Befestigungsmittel 32 jedoch in radialer Richtung 30 sowie in axialer Richtung 28 verschieblich gegenüber dem Grundkörper 20 bzw. gegenüber den Halteböcken 34.

Die Befestigungsmittel 32 können gegenüber den Halteböcken 34 gefedert angebracht sein. Ebenso können die Halteböcke 34 gefedert gegenüber dem Grundkörper 20 angebracht sein.

Von Vorteil ist außerdem, wenn die Befestigungseinrichtung 24 einen Kopplungsmechanismus 36 umfasst. Dieser Kopplungsmechanismus 36, wie er beispielsweise in Figur 1 schematisch dargestellt ist, kann eine Bewegung wenigstens zweier beweglicher, vorzugsweise (wie in Figur 1 gezeigt) aller beweglichen, Befestigungsmittel 32 in radialer Richtung 30 und/oder in axialer Richtung 28 koppeln. Vorzugsweise ist der Kopplungsmechanismus 36 derart ausgebildet, dass die Bewegung der gekoppelten beweglichen Befestigungsmittel 32 gleichförmig ist, sie sich also mit gleicher Geschwindigkeit radial (bzw. axial) einwärts oder radial (bzw. axial) auswärts bewegen. Ein derartiger Kopplungsmechanismus 36 ist mit allen hier beschriebenen Ausführungsformen, die Befestigungsmittel 32 umfassen, kombinierbar und derartige Kombinationen sind Gegenstand der vorliegenden Erfindung.

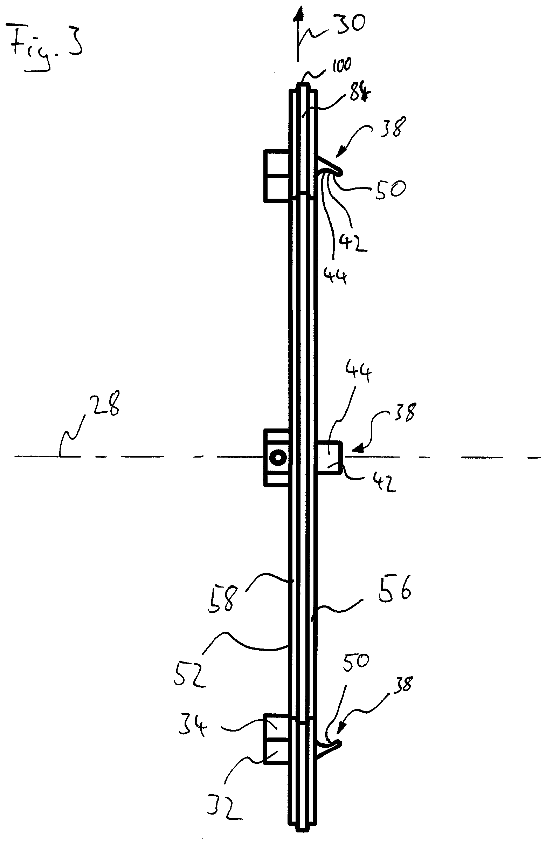

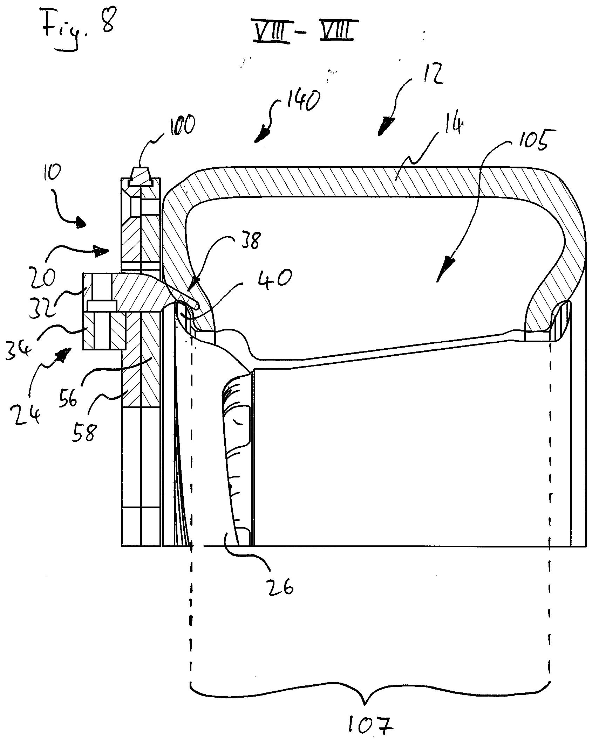

In einer bevorzugten Ausführungsform (wie sie bspw. in den Figuren 3, 4, 8 und 9 zu sehen ist) umfasst die Befestigungseinrichtung 24 bzw. umfassen deren Befestigungsmittel 32 jeweils einen Hakabschnitt 38, der ausgebildet ist, um einen Abschnitt 40, insbesondere ein Felgenhorn 40, der Felge 26 des Fahrzeugrads 12 zu hintergreifen (dieses Hintergreifen ist beispielsweise in Figur 8 gezeigt).

Bevorzugterweise weist die Befestigungseinrichtung 24 einen Kontaktabschnitt 42 bzw. mehrere Kontaktabschnitte 42 (die Kontaktabschnitte 42 sind beispielsweise in Figur 3 gut zu erkennen) auf, der vorzugsweise am Hakabschnitt 38 angeordnet ist. Die Kontaktabschnitte weisen vorteilhafterweise eine nachgiebige, elastische Beschichtung 44 auf, die dazu dient, eine Beschädigung des Abschnitts der Felge 26, insbesondere des Felgenhorns 40, zu verhindern.

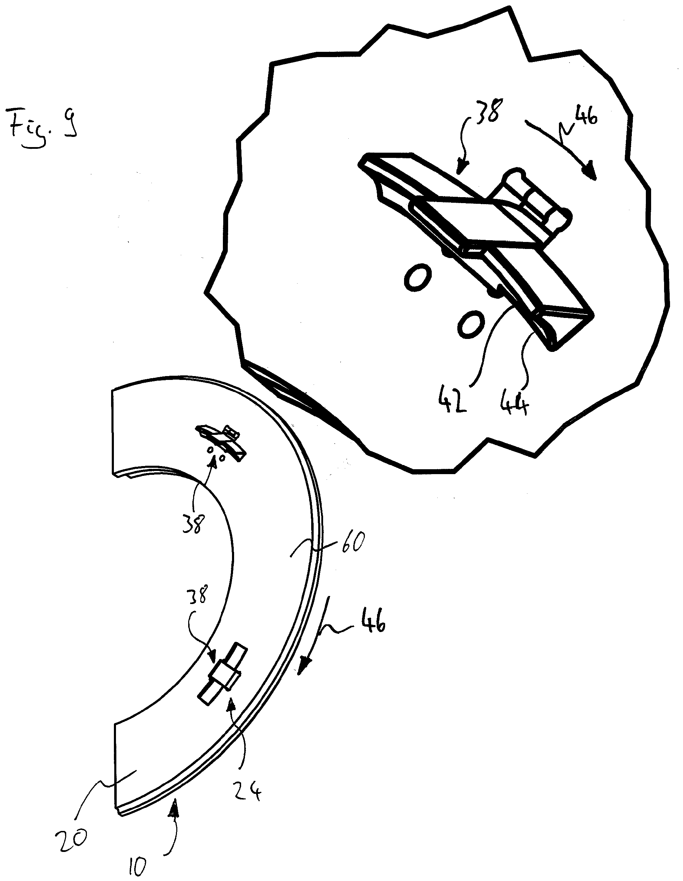

Der Kontaktabschnitt 42 bzw. der Hakabschnitt 38 kann, wie in Fig. 3 und auch insbesondere in Fig. 9 gut sichtbar, in einer Umfangsrichtung 46 gekrümmt ausgebildet sein, um sich beim Anbringen des Aufsatzes 10 an die Felge 26 an das Felgenhorn 40 anzuschmiegen bzw. flächig an diesem anzuliegen.

Die Befestigungseinrichtung 24 ist bevorzugt derart ausgebildet, dass sie, insbesondere über die Hakabschnitte 38 und/oder die Kontaktabschnitte 42, die Felge 26, insbesondere das Felgenhorn 40, auf wenigstens einem Sechstel (siehe Figur 9), vorzugsweise einem Viertel, vorzugsweise einem Drittel, vorzugsweise der Hälfte, deren, bzw. dessen, umfänglicher Erstreckung kontaktiert, wenn der Aufsatz 10 an dem Fahrzeugrad 12 angebracht ist.

Bei der Ausführungsform von Figur 9 weisen die Befestigungsmittel 32 in Umfangsrichtung 46 erstreckte und gekrümmte Fortsätze 48 auf, welche eine weite, flächige Kontaktierung des Felgenhorns 40 ermöglichen, so dass die Kontaktabschnitte 42 der jeweiligen Befestigungsmittel 32 wenigstens an einem Sechstel der umfänglichen Erstreckung des Felgenhorns 40 an diesem anliegen.

Die Befestigungseinrichtung 24 ist bevorzugt derart ausgebildet, dass der Aufsatz 10 beim Befestigen an der Felge 26 des Fahrzeugrads 12 in axialer Richtung 28 zur Felge 26 hin gedrängt wird (siehe bspw. die gekrümmte Ausführung der Hakabschnitte in Figur 3).

Ein derartiges Drängen des Aufsatzes in Richtung der Felge 26 wird vorzugsweise durch eine entsprechende Ausgestaltung der Befestigungsmittel 32 bzw. der Kontaktabschnitte 42 der Befestigungseinrichtung 24, insbesondere der Hakabschnitte 38 realisiert.

Die Befestigungseinrichtung 24 umfasst vorteilhafterweise wenigstens eine in axialer Richtung 28 gesehen nach radial innen, vorzugsweise linear oder bogenförmig, abfallende Spannfläche 50, wobei die Befestigungseinrichtung 24 derart ausgebildet ist, dass sich die Spannfläche 50 beim Befestigen des Aufsatzes 10 an der Felge 26 des Fahrzeugrads 12 nach radial innen bewegt, insbesondere verschiebt, und die Spannfläche 50 derart ausgebildet ist, dass der Aufsatz 10 beim Befestigen an der Felge 26 des Fahrzeugrads 12 in axialer Richtung 28 zur Felge 26 hin gedrängt wird.

Eine derartige Spannfläche 50 ist beispielsweise in Figur 3 als Teil der Kontaktabschnitte 42 bzw. der Hakabschnitte 38 ausgeführt. Die Spannflächen 50 sind bei der in Figur 3 gezeigten Ausführungsform derart gekrümmt, dass der Aufsatz 10, wenn sich die Befestigungsmittel 32 beim Anbringen des Aufsatzes 10 an der Felge 26 nach radial innen bewegen, durch die Krümmung der Spannflächen 50 entlang der axialen Richtung 28 zum Fahrzeugrad 12 hin gedrängt wird. Hierzu müssen die Spannflächen 50 jedoch nicht, wie in Figur 3 gezeigt, gekrümmt ausgeführt sein, Sie können auch beispielsweise gerade und von einer Außenseite 52 des Aufsatzes 10 aus gesehen nach radial innen abfallend ausgeführt sein. Für die Funktion der Spannflächen 50 ist ausreichend, dass sie von der Außenseite 52 des Aufsatzes 10 gesehen, beim Blick entlang der axialen Richtung 28 nach radial innen hin abfallen.

Der Grundkörper 20 kann, wie beispielsweise in Figur 3 ersichtlich, ein felgenseitiges Teilstück 56 und ein von diesem lösbares felgenabgewandtes Teilstück 58 umfassen.

Der Grundkörper 20 ist also beispielsweise bei der Ausführungsform von Figur 3 in zwei, weitestgehend kreisringscheibenförmige Teilstücke 56 und 58 teilbar.

Der Grundkörper 20, bzw. ggf. jeweils das felgenseitige Teilstück 56 und das felgenabgewandte Teilstück 58, umfasst bzw. umfassen vorteilhafterweise wenigstens zwei umfängliche Segmente 60.

Bei dem Beispiel aus Figur 1 umfassen jeweils das felgenseitige Teilstück 56 und das felgenabgewandte Teilstück 58 vier umfängliche Segmente 60. Eines dieser umfänglichen Segmente 60 des Aufsatzes 10, der in Figur 1 dargestellt ist, ist in Figur 2 in einer Einzeldarstellung gezeigt.

Die umfänglichen Segmente 60 sind bei dem Aufsatz 10, der in Figur 1 gezeigt ist, jeweils über eine formschlüssige Halterung 62 miteinander verbunden. Dabei wird ein in Umfangsrichtung 46 schwalbenschwanzartig ausgebildeter Fortsatz 64 in eine entsprechende Ausnehmung 66 des jeweils benachbarten Segments 60 eingesetzt. Über Schraubenlöcher 68 können Schrauben in entsprechende Schraubenaufnahmen 70 an der Ausnehmung 66 eingeschraubt werden und die Segmente 60 damit fest miteinander verbunden werden. Die Verwendung von Schrauben in Kombination mit den Schraubenlöchern 68 und den Schraubenaufnahmen 70 ist nicht zwingend, vielmehr können auch andere Befestigungsmechanismen, wie bspw. Klammern oder Klemmen, verwendet werden.

Die bspw. in Figur 1 gezeigte Halterung 62 mit den schwalbenschwanzartig ausgebildeten Fortsätzen 64 und den entsprechenden Ausnehmungen 66 stellt eine mögliche Ausführungsform einer Hintergriffstruktur 70 in umfänglicher Richtung 46 zur lösbar Verbindung der umfänglichen Segmente 60 dar.

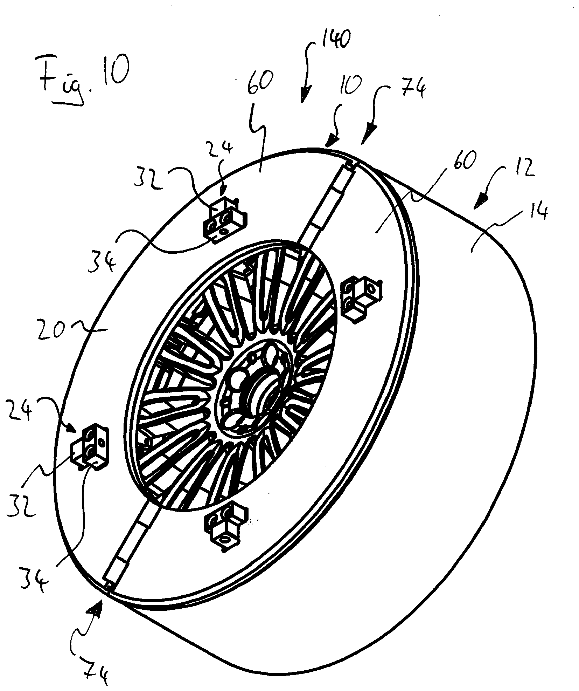

Die umfänglichen Segmente 60 können miteinander auch über einen, vorzugsweise lösbaren, Klappmechanismus 74 in umfänglicher Richtung 46 verbunden sein. Eine derartige Ausführungsform ist beispielsweise in Figur 10 gezeigt.

Vorteilhaft ist, wenn das felgenseitige Teilstück 56 und das felgenabgewandte Teilstück 58, bzw. je ein Segment 60 des felgenseitigen Teilstücks 56 und des felgenabgewandten Teilstücks 58, im zusammengesetzten Zustand einen Aufnahmeabschnitt 80 bilden, in dem ein Laufflächenkörper 84, bzw. ein Segment 86 des Laufflächenkörpers 84 (das bezüglich seiner umfänglichen Erstreckung entsprechend den umfänglichen Segmenten 60 des Grundkörpers 20 ausgebildet ist), beim Zusammensetzen in den zusammengesetzten Zustand formschlüssig, insbesondere über einen formschlüssigen Hintergriff 88, gehalten einsetzbar ist.

Bevorzugter Weise ist der Aufsatz 10 mit einem Laufflächenkörper 84 ausgebildet, der stoßdämpfend ausgebildet ist.

Vorzugsweise ist der Laufflächenkörper 84 aus einem elastisch federnden Material 90, beispielsweise Gummi oder einem anderen elastisch federnden Polymer gebildet.

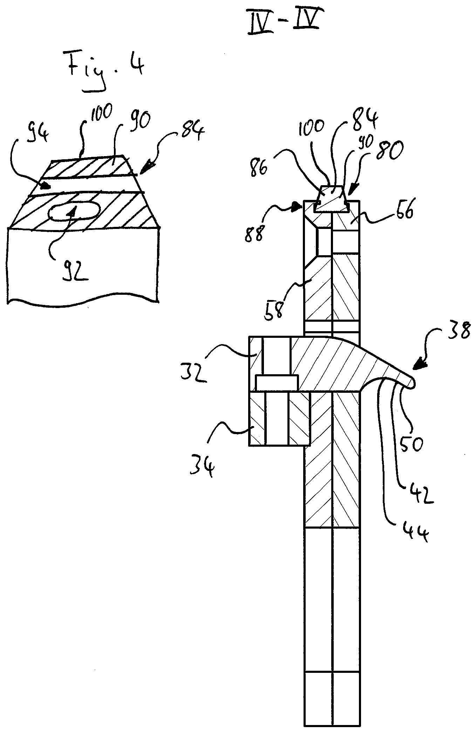

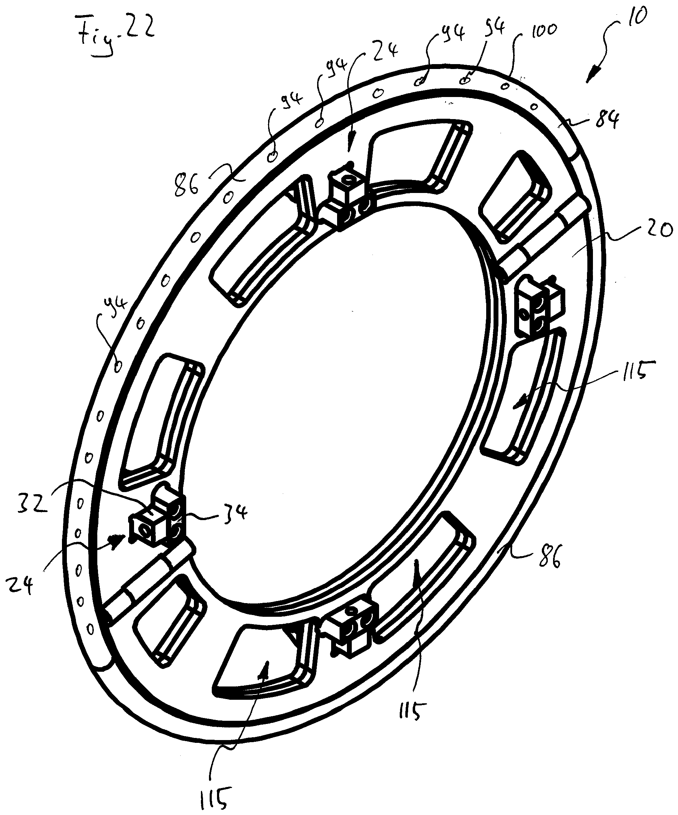

Alternativ oder zusätzlich kann der Laufflächenkörper 84 auch eine elastisch federnde Struktur aufweisen, insbesondere eine Hohlräume 92 und/oder Löcher 94 bzw. Durchbrüche 94 umfassende Struktur aufweisen (siehe Figur 4 links). In Figur 22 ist eines der Segmente 86 des Laufflächenkörpers 84 mit derartigen Durchbrüchen 94 gezeigt und ein weiteres Segment 86 des Laufflächenkörpers 84 ohne derartige Durchbrüche 94. Bevorzugterweise ist der Laufflächenkörper 84 jedoch über seine gesamte umfängliche Erstreckung gleichförmig, das heißt entweder mit Durchbrüchen 94 oder ohne Durchbrüche 94 ausgebildet.

Eine Laufoberfläche 100, also die Kontaktfläche des Aufsatzes 10 mit der Straße, kann durch den Laufflächenkörper 84 beziehungsweise dessen radial außen liegende Oberfläche gebildet sein.

In einer Ausführungsvariante, wie sie bspw. in den Figuren 17 bis 19 gezeigt ist, erstreckt sich eine radial außen liegende Laufoberfläche 100 des Aufsatzes 10 in Richtung des Fahrzeugrades 12 in axialer Richtung 28 gesehen bis in ein Felgenmaul der Felge 26 hinein, wenn der Aufsatz 10 an der Felge 26 des Fahrzeugrads 12 befestigt ist. In Figur 8 ist das Felgenmaul 105 mit entsprechendem Bezugszeichen gekennzeichnet und eine Felgenmaulweite mit Bezugszeichen 107 bezeichnet. Die Ausführung mit einer derartigen Laufoberfläche 100 ist selbstverständlich auch mit den lösbar miteinander verbundenen Segmenten 60, wie bspw. in Figur 1 dargestellt, kombinierbar.

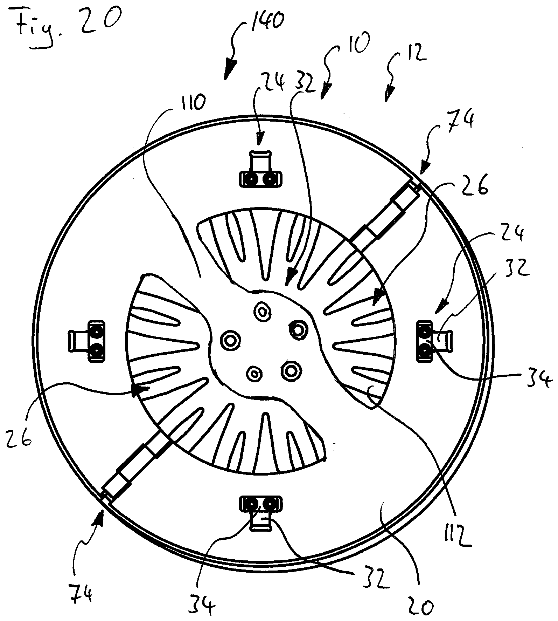

Der Aufsatz 10 kann auch ein Zusatzbefestigungselement 110 aufweisen. Das Zusatzbefestigungselement 110 ist dazu vorgesehen, den Aufsatz 10 im mittigen Bereich der Felge 26 zu befestigen. Das Zusatzbefestigungselement 110 kann hierzu beispielsweise ausgebildet sein, um den Aufsatz 10 im Bereich des Lochkreises 32, insbesondere an dem Lochkreis 32 (wie in Figur 20 gezeigt) und/oder an einer Zentralöffnung 109 (die Zentralöffnung 109 ist bspw. in Figur 6 mit einem Bezugszeichen versehen), der Felge 26 und/oder an einer Speiche 112 der Felge 26 an der Felge 26 zu befestigen.

Ein derartiges Zusatzbefestigungselement 110 kann, wie in Figur 20 gezeigt, einstückig mit dem Grundkörper 20 des Aufsatzes 10 ausgeführt sein. Alternativ ist es jedoch ebenso möglich, dass das Zusatzbefestigungselement 110 lösbar an dem Aufsatz 10 befestigt ist. Vorzugsweise ist die Befestigung des Zusatzbefestigungselements 110 dabei derart, dass das Zusatzbefestigungselement 110 gegenüber dem Aufsatz 10 bewegbar, vorzugsweise verschiebbar und/oder verschwenkbar ist.

Beispielsweise kann das Zusatzbefestigungselement 110 einschiebbar in den Grundkörper 20 des Aufsatzes 10 ausgeführt sein oder es kann klappbar ausgeführt sein. Auch kann das Zusatzbefestigungselement 110 im Bereich des Lochkreises 32 eine Trennfuge aufweisen, so dass es beispielsweise aus zwei Einzelelementen besteht. Das Zusatzbefestigungselement 110 kann mit den verschiedenen Ausführungsformen des Grundkörpers 20 des Aufsatzes 10 kombiniert werden.

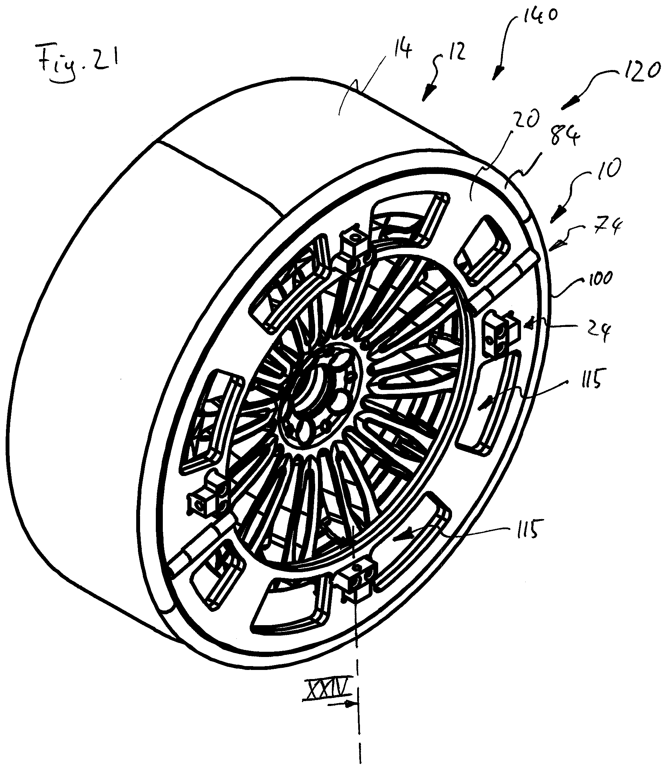

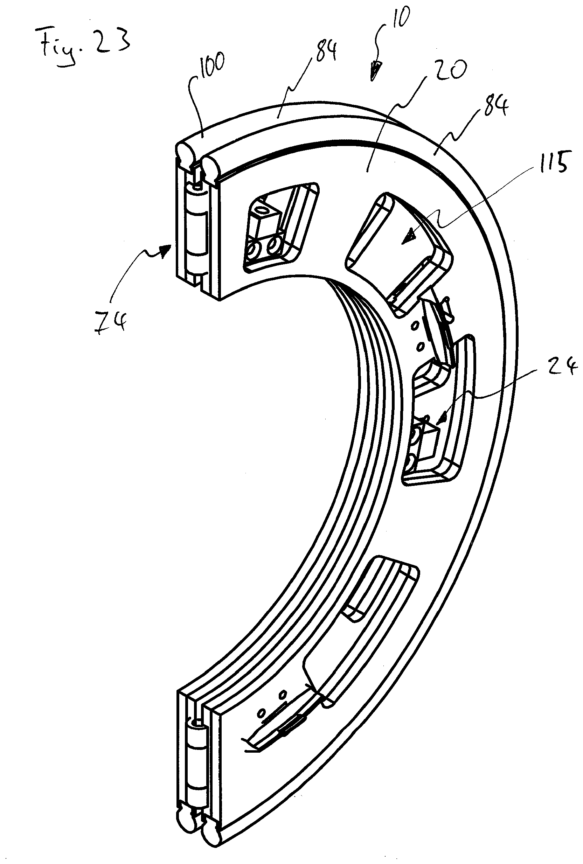

Wie es in den Figur 21 bis 23 gezeigt ist, kann es vorteilhaft sein, wenn der Grundkörper 20 Durchbrüche 115 aufweist. Diese Durchbrüche 115 können zum einen das Gewicht des Grundkörpers 20 und damit des Aufsatzes 10 reduzieren. Zum anderen können diese Durchbrüche 115 dazu dienen, dass der Aufsatz 10 in einfacher Weise zusammenklappbar ist (siehe Figur 23). In zusammengeklapptem Zustand können von der Oberfläche des Grundkörpers 20 abstehende Elemente wie beispielsweise die Befestigungseinrichtung 24 einfach in die Durchbrüche 115 eingeklappt werden (siehe Figur 23).

Gegenstand der vorliegenden Erfindung ist auch ein Aufsatzset 120 für ein Fahrzeugrad 12, dadurch gekennzeichnet, dass es einen Aufsatz 10a für die fahrzeugseitige Befestigung an der Felge 26 des Fahrzeugrads 12 umfasst und einen weiteren Aufsatz 10b für die fahrzeugabgewandtseitige Befestigung an der Felge 26 des Fahrzeugrads 12, wobei wenigstens einer der beiden Aufsätze 10a, 10b wie oben beschrieben ausgebildet ist.

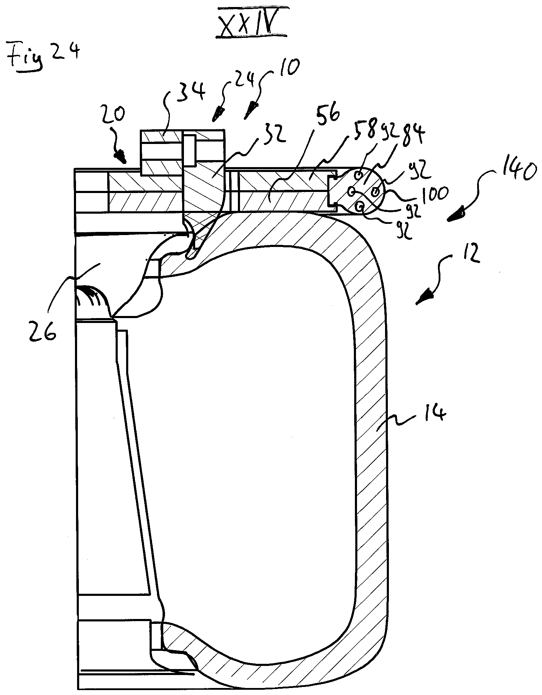

Vorzugsweise sind beide Aufsätze 10a, 10b, wie in Figur 24 dargestellt, gemäß einer der weiteren hier beschriebenen Ausführungsformen ausgeführt.

Vorzugsweise umfasst das Aufsatzset 120 ein Verbindungselement 130, mit dem die beiden Aufsätze 10a, 10b des Aufsatzsets 120 verliersicher auf gegenüberliegenden Seiten des Fahrzeugrads 12 und gegenseitig gegen das Fahrzeugrad 12 befestigbar, insbesondere spannbar, sind, um eine endgültige Befestigung über die Befestigungsmittel 24 zu ermöglichen. Das Verbindungselement 130 kann hierzu bspw. derart ausgebildet sein, dass es in beide Aufsätze 10a, 10b einhakbar ist. Soll das Verbindungselement 130 die beiden Aufsätze 10a, 10b gegen das Fahrzeugrad 12 spannen, so kann das Verbindungselement 130 zum Beispiel über einen Schraubmechanismus verkürzbar ausgebildet sein oder auch durch Einschieben verkürzbar ausgebildet sein. Bei der durch Einschieben verkürzbaren Variante sollte das Einschieben mit geringem Widerstand möglich sein und ein Ausfahren nur nach Betätigung eines Lösemechanismuses, um ein ungewolltes Lösen zu verhindern. Das Verbindungselement 130 kann auch elastisch ausgeführt sein, so dass es beim Anbringen gespannt wird und dann durch seine Eigenspannung die beiden Aufsätze 10a, 10b gegen das Fahrzeugrad 12 spannt.

Gegenstand der Erfindung ist auch ein System 140 aus einem Fahrzeugrad 12 und einem Aufsatz 10 oder einem Aufsatzset 120 für ein Fahrzeugrad 12, wobei der Aufsatz 10 bzw. das Aufsatzset 120 gemäß einer der hier beschriebenen Ausführungsform ausgebildet ist.

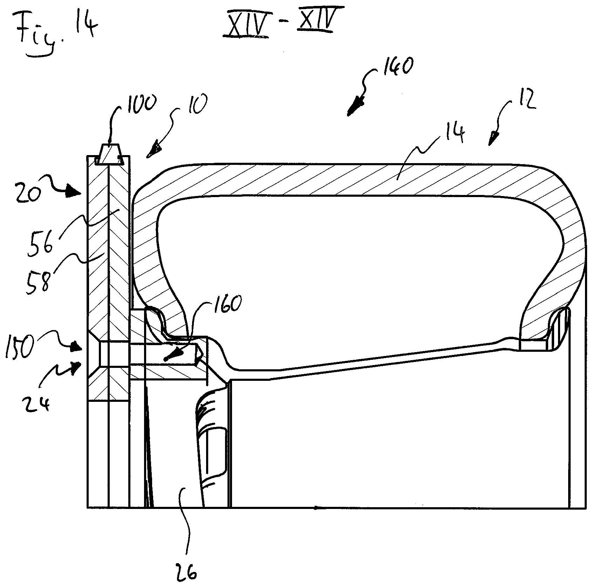

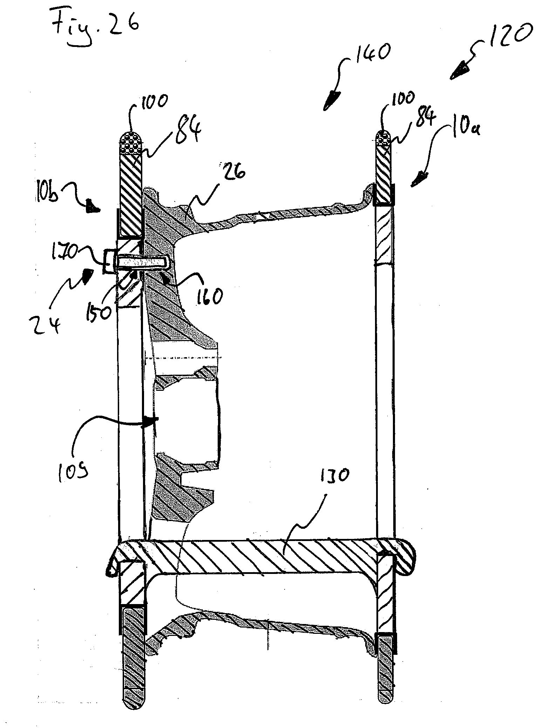

Bevorzugterweise umfasst bei dem System 140 der Aufsatz 10 bzw. wenigstens einer der Aufsätze 10 eine Ausnehmung 150 (siehe bspw. Fig. 14 oder Figur 26), über die der Aufsatz 10 an die Felge 26 des Fahrzeugrads 12 anschraubbar ist, wobei die Felge 26 des Fahrzeugrads 12 ein Schraubenloch 160 zur Aufnahme einer entsprechenden Befestigungsschraube 170 umfasst, wie dies in Figur 26 schematisch gezeigt ist.

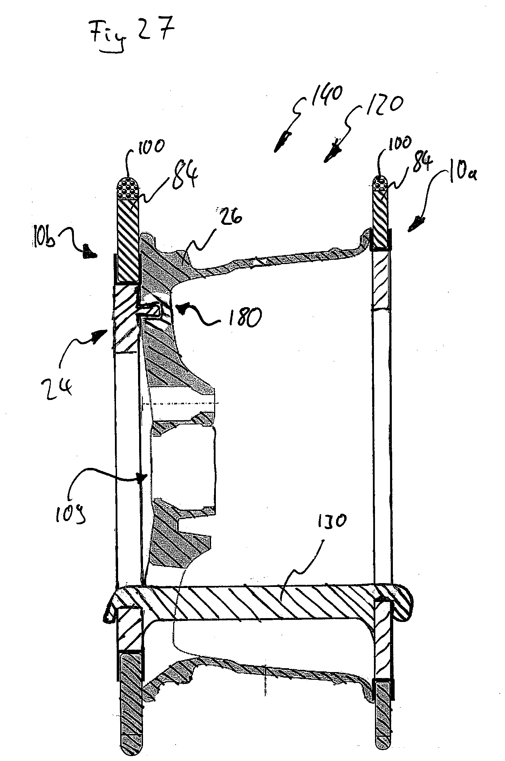

Alternativ kann der Aufsatz 10 bzw. wenigstens einer der Aufsätze 10 über eine Zapfen-Loch-Verbindung 180, die vorzugsweise selbstspannend und/oder selbstsichernd ausgebildet ist, mit der Felge 26 des Fahrzeugrads 12 verbindbar sein, wie dies in Figur 27 schematisch gezeigt ist.

## Patentansprüche

1. Aufsatz (10) für ein Fahrzeugrad (12) zur Ermöglichung eines Fahrbetriebs bei eingeschränkter Reifenfunktion mit einem Grundkörper (20) und einer Befestigungseinrichtung (24) zur Befestigung des Aufsatzes (10) an der Felge (26) des Fahrzeugrads (12), wobei der Grundkörper (20) in einer axialen Richtung (28) gesehen kreis- oder weitestgehend kreisringförmig ausgebildet ist,
**dadurch gekennzeichnet, dass** die Befestigungseinrichtung (24) Befestigungsmittel (32), die in mit dem Grundkörper (20) verbundenem Zustand gegenüber dem Grundkörper (20) in radialer Richtung (30) beweglich sind, und einen Kopplungsmechanismus (36) umfasst, der eine Bewegung von wenigstens zwei der Befestigungsmittel (32) in radialer Richtung (28) derart koppelt, dass sich alle gekoppelten Befestigungsmittel (32) entweder radial einwärts oder radial auswärts bewegen.

2. Aufsatz (10) für ein Fahrzeugrad nach Anspruch 1, wobei die Befestigungseinrichtung (24) bezüglich des Felgendurchmessers anpassbar und/oder derart ausgebildet ist, dass das lösbare Befestigungsmittel (32) in wenigstens zwei in radialer Richtung (30) versetzt zueinander angeordneten Positionen (P1, P2) in jeweils auf einen bestimmten Felgendurchmesser angepassten vorgesehenen Positionen (P1, P2) mit dem Grundkörper (20) verbindbar sind.

3. Aufsatz (10) für ein Fahrzeugrad (12) nach einem oder mehreren der vorangegangenen Ansprüche, wobei die Befestigungsmittel (32) in ihrem mit dem Grundkörper (20) verbundenen Zustand ferner gegenüber dem Grundkörper (20) in axialer Richtung beweglich, insbesondere verschieblich, sind und der Kopplungsmechanismus (36) vorzugsweise eine Bewegung wenigstens zweier der Befestigungsmittel (32) in axialer Richtung koppelt, wobei der Kopplungsmechanismus (36) optional derart ausgebildet ist, dass die Bewegung der gekoppelten beweglichen Befestigungsmittel (32) gleichförmig ist.

4. Aufsatz (10) für ein Fahrzeugrad (12) nach einem oder mehreren der vorangegangenen Ansprüche,
wobei die Befestigungseinrichtung (24) wenigstens ein federnd gelagertes oder federnd lagerbares Befestigungsmittel (32) umfasst und/oder einen federnd gelagerten Haltebock (34), der zur Befestigung eines Befestigungsmittels (32) an dem Aufsatz (10) dient, und/oder
wobei eines oder mehrere der Befestigungsmittel (32) einen Hakabschnitt (38) umfasst/umfassen, der jeweils ausgebildet ist, um einen Abschnitt (40), insbesondere ein Felgenhorn (40), der Felge (26) des Fahrzeugrads (12) zu hintergreifen.

5. Aufsatz (10) für ein Fahrzeugrad (12) nach einem oder mehreren der vorangegangenen Ansprüche, wobei die Befestigungseinrichtung (24) einen Kontaktabschnitt (42), der vorzugsweise am Hakabschnitt (38) angeordnet ist, umfasst, wobei der Kontaktabschnitt (42) eine nachgiebige, elastische Beschichtung (44) zur Verhinderung einer Beschädigung des Abschnitts (40) der Felge (26), insbesondere des Felgenhorns (40), umfasst.

6. Aufsatz (10) für ein Fahrzeugrad (12) nach Anspruch 5,
wobei der Kontaktabschnitt (42), insbesondere der Hakabschnitt (38), in Umfangsrichtung (46) gekrümmt ausgebildet ist, um flächig an dem Abschnitt (40) der Felge (26), insbesondere dem Felgenhorn (40), anzuliegen,
und/oder wobei die Befestigungseinrichtung (24) derart ausgebildet ist, dass sie, insbesondere über die Hakabschnitte (38) und/oder die Kontaktabschnitte (42), die Felge (26), insbesondere das Felgenhorn (40), auf wenigstens einem Sechstel, vorzugsweise einem Viertel, vorzugsweise einem Drittel, vorzugsweise der Hälfte, deren, bzw. dessen, umfänglicher Erstreckung kontaktiert, wenn der Aufsatz (10) an dem Fahrzeugrad (12) angebracht ist,
und/oder wobei die Befestigungseinrichtung (24), vorzugsweise der Kontaktabschnitt (42), vorzugsweise das Befestigungsmittel (32), insbesondere dessen Hakabschnitt (38), derart ausgebildet ist, dass der Aufsatz (10) beim Befestigen an der Felge (26) des Fahrzeugrads (12) in axialer Richtung (28) zur Felge (26) hin gedrängt wird.

7. Aufsatz (10) für ein Fahrzeugrad (12) nach einem der Ansprüche 5 und 6, wobei die Befestigungseinrichtung (24), insbesondere der Kontaktabschnitt (42) bzw. der Hakabschnitt (38), eine in axialer Richtung (28) gesehen nach radial innen, vorzugsweise linear oder bogenförmig, abfallende Spannfläche (50) umfasst, wobei die Befestigungseinrichtung (24) derart ausgebildet ist, dass sich die Spannfläche (50) beim Befestigen des Aufsatzes (10) an der Felge (26) des Fahrzeugrads (12) nach radial innen bewegt, insbesondere verschiebt, und die Spannfläche (50) derart ausgebildet ist, dass der Aufsatz (10) beim Befestigen an der Felge (26) des Fahrzeugrads (12) in axialer Richtung (28) zur Felge (26) hin gedrängt wird.

8. Aufsatz (10) für ein Fahrzeugrad (12) nach einem oder mehreren der vorangegangenen Ansprüche,
wobei der Grundkörper (20) ein felgenseitiges Teilstück (56) und ein von diesem lösbares felgenabgewandtes Teilstück (58) umfasst,
und/oder wobei der Grundkörper (20), bzw. ggf. jeweils das felgenseitige Teilstück (56) und das felgenabgewandte Teilstück (58), wenigstens zwei umfängliche Segmente (60) umfasst bzw. umfassen,
und/oder wobei die umfänglichen Segmente (60), vorzugsweise lösbar, miteinander, insbesondere über einen, vorzugsweise lösbaren, Klappmechanismus (74) oder eine Hintergriffstruktur (70), vorzugsweise die einen schwalbenschwanzartig ausgebildeten Fortsatz (64) an einem der Segmente und eine entsprechende Ausnehmung (66) an einem weiteren der Segmente (60) umfasst, in umfänglicher Richtung (46), miteinander verbunden sind.

9. Aufsatz (10) für ein Fahrzeugrad (12) nach einem der drei vorangegangenen Ansprüche, wobei das felgenseitige Teilstück (56) und das felgenabgewandte Teilstück (58), bzw. je ein Segment (60) des felgenseitigen Teilstücks (56) und des felgenabgewandten Teilstücks (58), im zusammengesetzten Zustand einen Aufnahmeabschnitt (80) bilden, in dem ein Laufflächenkörper (84), bzw. ein Segment (86) eines Laufflächenkörpers (84), beim Zusammensetzen in den zusammengesetzten Zustand formschlüssig, insbesondere über einen formschlüssigen Hintergriff (88), gehalten einsetzbar ist.

10. Aufsatz (10) für ein Fahrzeugrad (12) nach einem oder mehreren der vorangegangenen Ansprüche,
wobei der Aufsatz (10) einen Laufflächenkörper (84) umfasst, der stoßdämpfend ausgebildet ist, vorzugsweise wobei der Laufflächenkörper (84) aus einem elastisch federnden Material (90) gebildet ist und/oder eine elastisch federnde Struktur aufweist, insbesondere eine Hohlräume (92) und/oder Löcher (94) umfassende Struktur aufweist,
und/oder wobei sich eine radial außen liegende Laufoberfläche (100) des Aufsatzes (10) in Richtung des Fahrzeugrades (12) in axialer Richtung (28) gesehen bis in ein Felgenmaul (105) der Felge (26) erstrecken, wenn der Aufsatz (10) an der Felge (26) des Fahrzeugrads (12) befestigt ist,
und/oder wobei der Aufsatz ein Zusatzbefestigungselement (110) umfasst, das ausgebildet ist, um den Aufsatz (10) im Bereich des Lochkreises (32), insbesondere an dem Lochkreis (32) und/oder an der Zentralöffnung (109), der Felge (26) und/oder an einer Speiche (112) der Felge (26) an der Felge (26) zu befestigen.

11. Aufsatz (10) für ein Fahrzeugrad (12) nach dem vorangegangenen Anspruch, wobei das Zusatzbefestigungselement (110) lösbar oder unlösbar an dem Aufsatz (10) befestigt ist, vorzugsweise wobei die Befestigung des Zusatzbefestigungselements (110) derart ist, dass das Zusatzbefestigungselement (110) gegenüber dem Aufsatz (10) bewegbar, vorzugsweise verschiebbar und/oder verschwenkbar ist.

12. Aufsatzset (120) für ein Fahrzeugrad (12), wobei es einen Aufsatz (10a) für die fahrzeugseitige Befestigung an der Felge (26) des Fahrzeugrads (12) umfasst und einen weiteren Aufsatz (10b) für die fahrzeugabgewandtseitige Befestigung an der Felge (26) des Fahrzeugrads (12),
wobei wenigstens einer der beiden Aufsätze (10a, 10b) zur Ermöglichung eines Fahrbetriebs bei eingeschränkter Reifenfunktion geeignet ist und einen Grundkörper (20) sowie eine Befestigungseinrichtung (24) zur Befestigung des jeweiligen Aufsatzes (10) an der Felge (26) des Fahrzeugrads (12) aufweist, wobei der Grundkörper (20) in einer axialen Richtung 28 gesehen kreis- oder weitestgehend kreisringförmig ausgebildet ist
**dadurch gekennzeichnet, dass** wenigstens einer der beiden Aufsätze (10a, 10b) nach einem oder mehreren der vorangegangenen Ansprüche ausgebildet ist.

13. Aufsatzset (120) für ein Fahrzeugrad (12) nach dem vorangegangenen Anspruch, wobei es ein Verbindungselement (130) umfasst, mit dem die beiden Aufsätze (10a, 10b) des Aufsatzsets (120) verliersicher auf gegenüberliegenden Seiten des Fahrzeugrads (12) und gegenseitig gegen das Fahrzeugrad (12) befestigbar, insbesondere spannbar, um eine endgültige Befestigung über die Befestigungseinrichtung (24) zu ermöglichen.

14. System (140) aus einem Fahrzeugrad (12) und einem Aufsatz (10) oder einem Aufsatzset (120) für ein Fahrzeugrad (12) zur Ermöglichung des Fahrbetriebs bei eingeschränkter Reifenfunktion, wobei der Aufsatz (10) bzw. das Aufsatzset (120) nach einem oder mehreren der vorangegangenen Ansprüche ausgebildet ist.

15. System (140) nach dem vorangegangenen Anspruch, wobei der Aufsatz (10) bzw. wenigstens einer der Aufsätze (10a, 10b) eine Ausnehmung (150) umfasst über die der Aufsatz (10) an die Felge (26) des Fahrzeugrads (12) anschraubbar ist, wobei die Felge (26) des Fahrzeugrads (12) ein Schraubenloch (160) zur Aufnahme einer entsprechenden Befestigungsschraube (170) umfasst und/oder dass der Aufsatz (10) bzw. wenigstens einer der Aufsätze (10a, 10b) über eine Zapfen-Loch-Verbindung (180), die vorzugsweise selbstspannend und/oder selbstsichernd ausgebildet ist, mit der Felge (26) des Fahrzeugrads (12) verbindbar ist.

## Claims

1. Attachment (10) for a vehicle wheel (12) for enabling driving operation with limited tire function, comprising a base body (20) and a fastening device (24) for fastening the attachment (10) to the rim (26) of the vehicle wheel (12), wherein the base body (20), when seen in an axial direction (28), has a circular or substantially circular-ring-shaped form,
**characterised in that** the fastening device (24) comprises fastening means (32) which, when connected to the base body (20), are movable relative to the base body (20) in a radial direction (30), and a coupling mechanism (36) which couples a movement of at least two of the fastening means (32) in a radial direction (28) such that all coupled fastening means (32) move either radially inwards or radially outwards.

2. Attachment (10) for a vehicle wheel according to claim 1, wherein the fastening device (24) is configured to be adaptable with respect to the rim diameter and/or is designed such that the releasable fastening means (32) are adapted to be connected to the base body (20) in at least two positions (P1, P2) arranged offset relative to one another in the radial direction (30), in each case in intended positions (P1, P2) matched to a specific rim diameter.

3. Attachment (10) for a vehicle wheel (12) according to one or more of the preceding claims, wherein the fastening means (32), in their state connected to the base body (20), are also movable, in particular displaceable, in an axial direction relative to the base body (20), and the coupling mechanism (36) preferably couples a movement of at least two of the fastening means (32) in the axial direction, wherein the coupling mechanism (36) is optionally designed such that the movement of the coupled movable fastening means (32) is uniform.

4. Attachment (10) for a vehicle wheel (12) according to one or more of the preceding claims,
wherein the fastening device (24) comprises at least one spring mounted or mountable fastening means (32) and/or a spring mounted retaining block (34) which serves to fasten a fastening means (32) to the attachment (10), and/or
wherein one or more of the fastening means (32) comprises a hook portion (38) configured to engage behind a portion (40), in particular a rim flange (40), of the rim (26) of the vehicle wheel (12).

5. Attachment (10) for a vehicle wheel (12) according to one or more of the preceding claims, wherein the fastening device (24) comprises a contact portion (42), which is preferably arranged on the hook portion (38), wherein the contact portion (42) comprises a resilient, elastic coating (44) for preventing damage to the portion (40) of the rim (26), in particular to the rim flange (40).

6. Attachment (10) for a vehicle wheel (12) according to claim 5,
wherein the contact portion (42), in particular the hook portion (38), is curved in a circumferential direction (46) in order to rest flat against the portion (40) of the rim (26), in particular the rim flange (40),
and/or wherein the fastening device (24) is configured such that it contacts the rim (26), in particular the rim flange (40), over at least one sixth, preferably one quarter, preferably one third, preferably half, of its circumferential extent, in particular via the hook sections (38) and/or the contact portions (42), when the attachment (10) is mounted to the vehicle wheel (12),
and/or wherein the fastening device (24), preferably the contact portion (42), preferably the fastening means (32), in particular the hook portion (38) thereof, is configured such that the attachment (10), on fastening to the rim (26) of the vehicle wheel (12), is urged in an axial direction (28) towards the rim (26).

7. Attachment (10) for a vehicle wheel (12) according to any one of claims 5 and 6, wherein the fastening device (24), in particular the contact portion (42) or the hook section (38), comprises a clamping surface (50) which, when seen in an axial direction (28), slopes radially inwards, preferably in a linear or arcuate manner, wherein the fastening device (24) is configured such that the clamping surface (50), on fastening the attachment (10) to the rim (26) of the vehicle wheel (12), moves, in particular displaces, radially inwards, and wherein the clamping surface (50) is configured such that the attachment (10), on fastening to the rim (26) of the vehicle wheel (12), is urged towards the rim (26) in the axial direction (28).

8. Attachment (10) for a vehicle wheel (12) according to one or more of the preceding claims,
wherein the base body (20) comprises a rim-side part (56) and a part (58) remote from the rim which is detachable from the rim-side part,
and/or wherein the base body (20), or optionally in each case the rim-side part (56) and the part (58) remote from the rim, comprises at least two circumferential segments (60),
and/or wherein the circumferential segments (60) are connected to one another, preferably detachably, in the circumferential direction (46), in particular via a, preferably detachable, folding mechanism (74) or an engagement structure (70), preferably comprising a dovetail-like extension (64) on one of the segments and a corresponding recess (66) on a further one of the segments (60).

9. Attachment (10) for a vehicle wheel (12) according to any one of the three preceding claims, wherein the rim-side part (56) and the part (58) remote from the rim, or one segment (60) each of the rim-side part (56) and of the part (58) remote from the rim, form, in the assembled state, a receiving section (80) in which, on assembly into the assembled state, a tread body (84), or a segment (86) of a tread body (84), is insertable in a form-fitting manner, in particular via a form-fitting engagement (88).

10. Attachment (10) for a vehicle wheel (12) according to one or more of the preceding claims,
wherein the attachment (10) comprises a tread body (84) which is configured to be shock-absorbing, preferably wherein the tread body (84) is formed from an elastically resilient material (90) and/or has an elastically resilient structure, in particular a structure comprising cavities (92) and/or holes (94),
and/or wherein a radially outer tread surface (100) of the attachment (10), when seen in an axial direction (28), extends into a rim mouth (105) of the rim (26) when the attachment (10) is mounted to the rim (26) of the vehicle wheel (12),
and/or wherein the attachment comprises an additional fastening element (110) configured to fasten the attachment (10) on the rim (26) in the region of the bolt circle (32), in particular to the bolt circle (32) and/or to the central opening (109), of the rim (26) and/or to a spoke (112) of the rim (26).

11. Attachment (10) for a vehicle wheel (12) according to the preceding claim, wherein the additional fastening element (110) is detachably or non-detachably fastened to the attachment (10), preferably wherein the fastening of the additional fastening element (110) is such that the additional fastening element (110) is movable, preferably displaceable and/or pivotable, relative to the attachment (10).

12. Attachment set (120) for a vehicle wheel (12), comprising an attachment (10a) for attachment to the rim (26) of the vehicle wheel (12) on the vehicle side and a further attachment (10b) for attachment to the rim (26) of the vehicle wheel (12) on the side remote from the vehicle,
wherein at least one of the two attachments (10a, 10b) is suitable for enabling driving operation with limited tire function and comprises a base body (20) and a fastening device (24) for fastening the respective attachment (10) to the rim (26) of the vehicle wheel (12), wherein the base body (20), when seen in an axial direction (28), has a circular or substantially circular-ring-shaped form,
**characterised in that** at least one of the two attachments (10a, 10b) is formed according to one or more of the preceding claims.

13. Attachment set (120) for a vehicle wheel (12) according to the preceding claim, comprising a connecting element (130) by means of which the two attachments (10a, 10b) of the attachment set (120) are configured to be fastened in a loss-proof manner on opposite sides of the vehicle wheel (12) and mutually against the vehicle wheel (12), in particular in a tensionable manner, in order to allow final fastening via the fastening device (24).

14. A system (140) comprising a vehicle wheel (12) and an attachment (10) or an attachment set (120) for a vehicle wheel (12) for enabling driving operation with limited tire function, wherein the attachment (10) or the attachment set (120) is formed according to one or more of the preceding claims.

15. System (140) according to the preceding claim, wherein the attachment (10) or at least one of the attachments (10a, 10b) comprises a recess (150) via which the attachment (10) can be screwed onto the rim (26) of the vehicle wheel (12), wherein the rim (26) of the vehicle wheel (12) comprises a screw hole (160) for receiving a corresponding fastening screw (170) and/or wherein the attachment (10) or at least one of the attachments (10a, 10b) comprises a screw hole (160) for receiving a corresponding fastening screw (170) and/or wherein the attachment (10) or at least one of the attachments (10a, 10b) is configured to be connected to the rim (26) of the vehicle wheel (12) via a pin-hole connection (180), which is preferably of a self-tightening and/or self-locking design.

## Revendications

1. Élément à monter (10) sur une roue de véhicule (12) permettant une conduite alors que le fonctionnement de la roue est limitée, comprenant un corps de base (20) et un dispositif de fixation (24) destiné à fixer l'élément à monter (10) sur la jante (26) de la roue de véhicule (12), dans lequel le corps de base (20) se présente en forme circulaire ou très largement en forme annulaire lorsqu'il est observé dans une direction axiale (28),
**caractérisé en ce que** le dispositif de fixation (24) comprend des moyens de fixation (32), qui, lorsqu'ils sont reliés au corps de base (20), peuvent se déplacer par rapport au corps de base (20) dans la direction radiale (30), et comprend un mécanisme d'accouplement (36), qui accouple le mouvement d'au moins des moyens de fixation (32) dans la direction radiale (28) de sorte que tous les moyens de fixation accouplés (32) se déplacent soit radialement vers l'intérieur soit radialement vers l'extérieur.

2. Élément à monter (10) sur une roue de véhicule selon la revendication 1, dans lequel le dispositif de fixation (24) est conçu ou adaptable au diamètre de la jante de manière à ce que le moyen de fixation (32) amovible peut être relié au corps de base (20) dans au moins deux positions (P1, P2) décalées l'une par rapport à l'autre dans la direction radiale (30) dans des positions adaptées respectivement à un diamètre de jante déterminé.

3. Élément à monter (10) sur une roue de véhicule selon l'une ou plusieurs revendications précédentes, dans lequel les moyens de fixation (32), lorsqu'ils sont reliés au corps de base (20), peuvent en outre se déplacer, voire se coulisser par rapport au corps de base (20) dans la direction axiale, et le mécanisme d'accouplement (36) couple de préférence un mouvement d'au moins deux des moyens de fixation (32) dans la direction axiale, le mécanisme d'accouplement étant conçu éventuellement de manière à ce que le mouvement des moyens de fixation (32) mobiles accouplés soit uniforme.

4. Élément à monter (10) sur une roue de véhicule selon l'une ou plusieurs revendications précédentes, dans lequel le dispositif de fixation (24) comprend au moins un moyen de fixation (32) monté sur ressort ou pouvant être monté sur ressort et/ou un bloc de retenue (34) monté sur ressort, qui sert à la fixation d'un moyen de fixation (32) sur l'élément à monter (10), et/ou
dans lequel un ou plusieurs moyens de fixation (32) comprend/comprennent une partie crochet (38), qui est conçue respectivement pour venir se bloquer sur l'arrière d'une partie (40), en particulier un bord de jante (40), de la jante (26) de la roue de véhicule (12).

5. Élément à monter (10) sur une roue de véhicule selon l'une ou plusieurs revendications précédentes, dans lequel le dispositif de fixation (24) comprend une partie de contact (42), qui de préférence est disposée sur la partie crochet (38), dans lequel la partie de contact (42) comprend un revêtement (44) élastique, souple pour empêcher que la partie (40) de la jante (26), en particulier le bord de jante (40) ne se détériore.

6. Élément à monter (10) sur une roue de véhicule selon la revendication 5,
dans lequel la partie de contact (42), en particulier la partie crochet (38), sont incurvées dans la direction circonférentielle (46) afin de s'appliquer à plat contre la partie (40) de la jante (26), en particulier contre le bord de jante (40),
et/ou dans lequel le dispositif de fixation (24) est conçu de sorte qu'il entre en contact, en particulier par l'intermédiaire des parties crochets (38) et/ou des parties de contact (42), avec la jante (26), en particulier le rebord de jante (40), sur au moins un sixième, de préférence un quart, de préférence un tiers, de préférence la moitié de son étendue périphérique, lorsque l'élément à monter (10) est monté sur la roue (12) du véhicule,
et/ou dans lequel le dispositif de fixation (24), de préférence la partie crochet (42), de préférence le moyen de fixation (32), en particulier sa partie crochet (38), est conçu(e) de manière à ce que l'élément à monter (10) est poussé vers la jante (26) lors de la fixation sur la jante (26) de la roue de véhicule (12) dans la direction axiale (28).

7. Élément à monter (10) sur une roue de véhicule selon l'une quelconque des revendications 5 et 6, dans lequel le dispositif de fixation (24), en particulier la partie de contact (42) ou la partie crochet (38) comprend une surface de serrage (50) inclinée radialement vers l'intérieur, de préférence linéairement ou en forme d'arc, lorsqu'elle est observée dans la direction axiale (28), dans lequel le dispositif de fixation (24) étant conçu de telle sorte que la surface de serrage (50) se déplace, en particulier se coulisse, radialement vers l'intérieur lors de la fixation de l'élément à monter (10) sur la jante (26) de la roue de véhicule (12), et la surface de serrage (50) est conçue de telle sorte que l'élément à monter (10) est poussé vers la jante (26) dans la direction axiale (28) lors de la fixation sur la jante (26) de la roue de véhicule (12).

8. Élément à monter (10) sur une roue de véhicule selon l'une ou plusieurs revendications précédentes, dans lequel le corps de base comprend un segment (56) côté jante et un segment (58) orienté à l'opposé de la jante et pouvant être détachée de cette dernière,
et/ou dans lequel le corps de base (20) ou, le cas échéant, respectivement le segment (56) côté jante et le segment (58) opposé à la jante, comprend ou comprennent au moins deux segments (60) périphériques, et/ou dans lequel les segments périphériques (60) sont reliés les uns aux autres, de préférence de manière détachable, en particulier par l'intermédiaire d'un mécanisme de rabattement (74), de préférence détachable, ou d'une structure de blocage arrière (70), de préférence comprenant un prolongement (64) en forme de queue d'aronde sur l'un des segments et un évidement correspondant (66) sur un autre des segments (60), dans la direction périphérique (46).

9. Élément à monter (10) sur une roue de véhicule selon l'une ou plusieurs revendications précédentes, dans lequel le segment (56) côté jante et le segment (58), opposé à la jante, ou chaque segment (60) du segment (56) côté jante et du segment (58) opposé à la jante, forment, lorsqu'ils sont assemblés, une partie de réception (80) dans lequel un corps de bande de roulement (84), ou un segment (86) d'un corps de bande de roulement (84), peut être inséré en étant maintenu par complémentarité de forme, en particulier par l'intermédiaire d'un élément de blocage arrière (88) à complémentarité de forme, lors de l'assemblage lorsqu'ils sont assemblés.

10. Élément à monter (10) sur une roue de véhicule selon l'une ou plusieurs revendications précédentes, dans lequel l'élément à monter (10) comprenant un corps de bande de roulement (84) qui est conçu pour amortir les chocs, de préférence le corps de bande de roulement (84) étant formé d'un matériau élastique (90) et/ou présentant une structure élastique, en particulier présentant une structure comprenant des cavités (92) et/ou des trous (94),
et/ou dans lequel une bande de roulement (100) de l'élément à monter (10) situé radialement à l'extérieur s'étend en direction de la roue de véhicule (12), vu dans la direction axiale (28), jusque dans une bouche de jante (105) de la jante (26), lorsque l'élément à monter (10) est fixé à la jante (26) de la roue de véhicule (12), et/ou l'élément à monter comprend un élément de fixation supplémentaire (110) qui est conçu pour fixer l'élément à monter (10) à la jante (26) dans la zone du trou de perçage (32), en particulier au trou de perçage (32) et/ou à l'ouverture centrale (109), et/ou à un rayon (112) de la jante (26).

11. Élément à monter (10) sur une roue de véhicule selon l'une ou plusieurs revendications précédentes, dans lequel l'élément de fixation supplémentaire (110) est fixé de manière amovible ou à demeure sur l'élément à monter (10), de préférence, la fixation de l'élément de fixation supplémentaire (110) étant tel que l'élément de fixation supplémentaire (110) peut être déplacé, de préférence coulissé et/ou pivoté, par rapport à l'élément à monter (10).

12. Kit d'éléments à monter (10) sur une roue de véhicule (12), qui comprend un élément à monter (10a) pour la fixation côté véhicule sur la jante (26) de la roue de véhicule (12), et un autre élément à monter (10b) pour la fixation côté opposé de véhicule sur la jante (26) de la roue de véhicule (12),
dans lequel au moins l'un des deux éléments à monter (10a, 10b) étant adapté pour permettre une conduite alors que la fonction de pneu est limitée et présentant un corps de base (20) ainsi qu'un dispositif de fixation (24) pour la fixation de l'élément à monter respective (10) sur la jante (26) de la roue de véhicule (12), le corps de base (20), lorsqu'il est observé dans une direction axiale 28, étant réalisé en forme circulaire ou largement circulaire
**caractérisé en ce que** l'au moins une des deux éléments à monter (1àa, 10b) est conçu selon l'une ou plusieurs des revendications précédentes.

13. Kit d'éléments à monter (10) sur une roue de véhicule (12) selon la revendication précédente, qui comprend un élément de liaison (130), avec lequel les deux éléments à monter (10a, 10b) du kit de éléments à monter (120) peuvent être fixés, en particulier serrés, de manière à ne pas se perdre, sur des côtés opposés de la roue de véhicule (12) et réciproquement contre la roue de véhicule (12), afin de permettre une fixation définitive au moyen du dispositif de fixation (24).

14. Système (140) constitué d'une roue de véhicule (12) et d'un élément rapporté (10) ou d'un kit d'éléments à monter (120) pour une roue de véhicule (12) permettant une opération de conduite alors que le fonctionnement de la roue est limitée, l'élément à monter (10) ou le kit d'éléments à monter (120) est conçu selon l'une ou plusieurs des revendications précédentes.

15. Système (140) selon la revendication précédente, dans lequel l'élément à monter (10) ou au moins l'un des éléments à monter (10a, 10b) comprend un évidement (150) par lequel l'élément à monter (10) peut être vissé sur la jante (26) de la roue de véhicule (12), dans lequel la jante (26) de la roue de véhicule (12) comprend un trou de vis (160) pour loger la vis de fixation correspondante et/ou l'élément à monter (10) ou au moins l'un des éléments à monter (10a, 10b) peut être relié à la jante (26) de la roue de véhicule (12) par l'intermédiaire d'une liaison tenon-trou (180), qui est de préférence conçu de manière à être auto-serrant et/ou auto-bloquant.
